# EUROPEAN PATENT APPLICATION

(11) **EP 4 668 389 A2**
(43) Date of publication of application: **24.12.2025**
(21) Application number: 25173076.8
(22) Date of filing: 29.04.2025
(51) Int. Cl.: H01M 10/04, H01M 10/052, H01M 10/0585, B65H 31/10

(54) **ELECTRODE STACKING APPARATUS, AND METHOD OF MANUFACTURING RECHARGEABLE LITHIUM BATTERY UTILIZING THE ELECTRODE STACKING APPARATUS**

(30) Priority: 02.05.2024 KR 20240058436
(71) Applicant: SAMSUNG SDI CO., LTD., Yongin-si, Gyeonggi-do 17084 (KR)
(72) Inventor: Kim, Seongdae, 17084 Yongin-si, Gyeonggi-do (KR); Lee, Jinhyon, 17084 Yongin-si, Gyeonggi-do (KR); Choe, Yunju, 17084 Yongin-si, Gyeonggi-do (KR); Choi, Jongsup, 17084 Yongin-si, Gyeonggi-do (KR); Kim, Janghwan, 17084 Yongin-Si, Gyeonggi-do (KR)
(74) Representative: Gulde & Partner

(57) **Abstract**

An electrode stacking apparatus includes a stacking table and a sheet supply unit that includes a rotary unit and first to fifth ejection units. The rotary unit is configured to rotate and concurrently to sequentially place the first to fifth ejection units on the stacking table. The first ejection unit is configured to eject a first electrode substrate. The second ejection unit is configured to eject a first electrode mixture. The third ejection unit is configured to eject a separator. The fourth ejection unit is configured to eject a second electrode mixture. The fifth ejection unit is configured to eject a second electrode substrate.

## Description

### BACKGROUND

### 1. Field

The present disclosure relates to an electrode stacking apparatus, a method of manufacturing a rechargeable lithium battery utilizing the electrode stacking apparatus, and a rechargeable lithium battery manufactured utilizing the method.

### 2. Description of the Related Art

Recently, with a rapid spread of battery-utilizing electronic devices, such as mobile phones, laptop computers, and/or electric vehicles, the demand for rechargeable batteries with relatively high energy density and high capacity has rapidly increased (surged). Therefore, intensive research has been conducted to enhance or improve performance of rechargeable batteries, e.g., rechargeable lithium batteries.

A rechargeable lithium battery may include a positive electrode, a negative electrode, and an electrolyte, the positive and negative electrodes including an active material in which intercalation and deintercalation are possible, and the rechargeable lithium battery may generate electrical energy caused by oxidation and reduction reactions if (e.g., when) lithium ions are intercalated and deintercalated.

### SUMMARY

The invention is defined by the appended claims. The description that follows is subjected to this limitation. Any disclosure lying outside the scope of said claims is only intended for illustrative as well as comparative purposes.

One or more aspects of embodiments of the present disclosure are directed towards an electrode stacking apparatus that may sequentially stack a positive electrode current collector, a positive electrode active material layer, a separator, a negative electrode active material layer, and a negative electrode current collector, and may then perform a simultaneous lamination.

One or more aspects of embodiments of the present disclosure are directed towards a method of manufacturing a rechargeable lithium battery utilizing the electrode stacking apparatus.

One or more aspects of embodiments of the present disclosure are directed towards a rechargeable lithium battery manufactured utilizing the method.

Additional aspects will be set forth in part in the description which follows and, in part, will be apparent from the description, or may be learned by practice of the presented embodiments of the disclosure.

In one or more embodiments, an electrode stacking apparatus may include: a stacking table, and a sheet supply unit that includes a rotary unit and first to fifth ejection units. The rotary unit may be configured to rotate and concurrently (e.g., simultaneously) to sequentially place the first to fifth ejection units on the stacking table. The first ejection unit may be configured to eject a first electrode substrate. The second ejection unit may be configured to eject a first electrode mixture. The third ejection unit may be configured to eject a separator. The fourth ejection unit may be configured to eject a second electrode mixture. The fifth ejection unit may be configured to eject a second electrode substrate.

In one or more embodiments, a rechargeable lithium battery may include: a negative electrode that includes a negative electrode current collector and a negative electrode active material layer on the negative electrode current collector, a positive electrode that includes a positive electrode current collector and a positive electrode active material layer on the positive electrode current collector, and a separator between the negative electrode active material layer and the positive electrode active material layer. The separator may include: a buried part between the negative electrode active material layer and the positive electrode active material layer, and a protruding part that is a portion other than the buried part. A maximum thickness of the protruding part may be greater than a thickness of the buried part.

In one or more embodiments, a method of manufacturing a rechargeable lithium battery may include: sequentially providing a first electrode substrate and a first electrode mixture on a stacking table via a sheet supply unit, aligning and fixing the first electrode substrate and the first electrode mixture via a sheet alignment unit, sequentially providing a separator, a second electrode mixture, and a second electrode substrate on the first electrode mixture via the sheet supply unit, and aligning and fixing the second electrode substrate and the second electrode mixture via the sheet alignment unit to manufacture a stack structure.

### BRIEF DESCRIPTION OF DRAWINGS

FIG. 1 illustrates a simplified conceptual diagram showing a rechargeable lithium battery according to one or more embodiments of the present disclosure.
FIGS. 2-5 illustrate simplified diagrams each showing a rechargeable lithium battery according to one or more embodiments of the present disclosure.
FIG. 6A illustrates a simplified cross-sectional view showing a rechargeable lithium battery according to one or more embodiments of the present disclosure.
FIG. 6B illustrates an enlarged view showing a separator of FIG. 6A and a first electrode mixture and a second electrode mixture on top and bottom surfaces of the separator.
FIG. 7 illustrates a simplified cross-sectional view showing a rechargeable lithium battery according to one or more embodiments of the present disclosure.
FIG. 8 illustrates a simplified conceptual diagram showing an electrode stacking apparatus according to one or more embodiments of the present disclosure.
FIG. 9 illustrates a plan view showing a sheet supply unit according to one or more embodiments of the present disclosure.
FIGS. 10 and 11 illustrate cross-sectional views each showing an ejection unit according to one or more embodiments of the present disclosure.
FIG. 12 illustrates a plan view showing a case arm according to one or more embodiments of the present disclosure.
FIG. 13A illustrates a cross-sectional view taken along the line A-A' of the case arm depicted in FIG. 12.
FIG. 13B illustrates a cross-sectional view showing an electrode substrate and an electrode mixture gripped in an electrode receiving space of a case arm.
FIG. 14 illustrates a plan view showing a case arm according to one or more embodiments of the present disclosure.
FIG. 15A illustrates a cross-sectional view taken along the line A-A' of the case arm depicted in FIG. 14.
FIG. 15B illustrates a cross-sectional view showing an electrode substrate and an electrode mixture gripped in an electrode receiving space of a case arm.
FIGS. 16-34 illustrate diagrams showing a method of manufacturing a rechargeable lithium battery according to one or more embodiments of the present disclosure.

### DETAILED DESCRIPTION

In order to sufficiently understand the configuration and effect of the present disclosure, one or more embodiments will be described with reference to the accompanying drawings. It should be noted, however, that the present disclosure is not limited to the following example embodiments, and may be implemented in one or more suitable forms. Rather, the example embodiments are provided only to disclose the present disclosure and let those skilled in the art fully know the scope of the present disclosure.

In the present disclosure, the terminology utilized herein is utilized to describe embodiments only, and is not intended to limit the present disclosure. As used herein, the singular forms "a," "an," and "the" are intended to include the plural forms as well unless the context clearly dictates otherwise. Further, the utilization of "may" when describing embodiments of the present disclosure refers to "one or more embodiments of the present disclosure". It will be understood that, if (e.g., when) an element is referred to as being on another element, the element may be directly on the other element or intervening elements may be present between therebetween. In the drawings, thicknesses of some components are exaggerated for effectively explaining the technical contents. Like reference numerals refer to like elements throughout, and duplicative descriptions thereof may not be provided the specification.

Unless otherwise specially noted in this description, the expression of singular form may include the expression of plural form. In addition, unless otherwise specially noted, the phrase "A or B" may indicate "A but not B", "B but not A", and "A and B". Further, as utilized herein, the term "and/or" includes any and all combinations of one or more of the associated listed items. Expressions such as "at least one of," "one of," and "selected from," when preceding a list of elements, modify the entire list of elements and do not modify the individual elements of the list. For example, "at least one of a, b or c", "at least one selected from a, b, and c", "at least one selected from among a to c", etc., may indicate only a, only b, only c, both (e.g., simultaneously) a and b, both (e.g., simultaneously) a and c, both (e.g., simultaneously) b and c, all of a, b, and c, or variations thereof. The "/" utilized herein may be interpreted as "and" or as "or" depending on the situation. The terms "comprise(s)/comprising," "include(s)/including," and/or "have(has)/having" utilized in this description do not exclude the presence or addition of one or more other components.

As utilized herein, the term "a combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D₅₀) where a cumulative volume is about 50 volume % in a particle size distribution. D₅₀ refers to the average diameter (or size) of particles whose cumulative volume corresponds to 50 vol% in the particle size distribution (e.g., cumulative distribution), and refers to the value of the particle size corresponding to 50% from the smallest particle when the total number of particles is 100% in the distribution curve accumulated in the order of the smallest particle size to the largest particle size. In the present disclosure, when particles are spherical, "diameter" indicates an average particle diameter, and when the particles are non-spherical, the "diameter" indicates a major axis length. The average particle diameter (D₅₀) may be measured by a method widely suitable to those skilled in the art, for example, by a particle size analyzer, for example, HORIBA, LA-950 laser particle size analyzer, a transmission electron microscope (TEM) image, or a scanning electron microscope (SEM) image. In one or more embodiments, a dynamic light-scattering measurement device is utilized to perform a data analysis, the number of particles is counted for each particle size range, and then from the data, an average particle diameter (D₅₀) value may be obtained through a calculation. Dissimilarly, a laser scattering method may be utilized to measure the average particle diameter (D₅₀). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device.

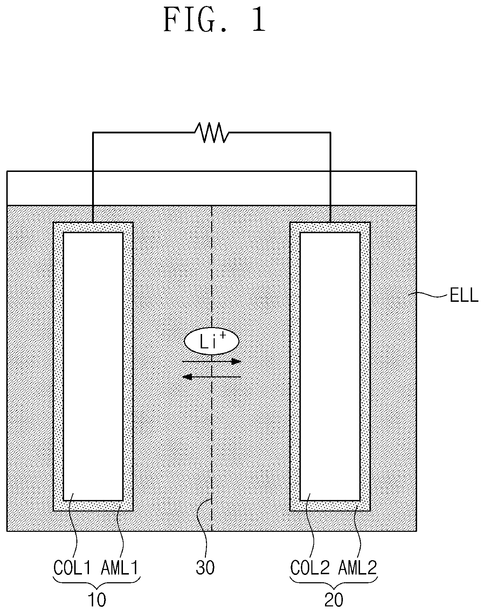

FIG. 1 illustrates a simplified conceptual diagram showing a rechargeable lithium battery according to one or more embodiments of the present disclosure. Referring to FIG. 1, a rechargeable lithium battery may include a positive electrode 10, a negative electrode 20, a separator 30, and an electrolyte ELL.

The positive electrode 10 and the negative electrode 20 may be spaced and/or apart (e.g., spaced apart or separated) from each other across the separator 30. The separator 30 may be (e.g., arranged) between the positive electrode 10 and the negative electrode 20. The positive electrode 10, the negative electrode 20, and the separator 30 may be in contact with the electrolyte ELL. The positive electrode 10, the negative electrode 20, and the separator 30 may be impregnated in the electrolyte ELL.

The electrolyte ELL may be a medium by which lithium ions are transferred between the positive electrode 10 and the negative electrode 20. In the electrolyte ELL, the lithium ions may move through the separator 30 toward one selected from among the positive electrode 10 and the negative electrode 20.

### Positive Electrode 10

The positive electrode 10 for a rechargeable lithium battery may include a current collector COL1 and a positive electrode active material layer AML1 formed on the current collector COL1. The positive electrode active material layer AML1 may include a positive electrode active material and further include a binder and/or a conductive material.

For example, the positive electrode 10 may further include an additive that may serve as a sacrificial positive electrode.

An amount of the positive electrode active material may be about 90 wt% to about 99.5 wt% relative to 100 wt% of a total weight of the positive electrode active material layer AML1. An amount of each of the binder and the conductive material may be about 0.5 wt% to about 5 wt% relative to 100 wt% of a total weight of the positive electrode active material layer AML1.

The binder may improve attachment of positive electrode active material particles to each other and also improve attachment of the positive electrode active material to the current collector COL1. The binder may include, for example, polyvinyl alcohol, carboxymethyl cellulose, hydroxypropyl cellulose, diacetyl cellulose, polyvinylchloride, carboxylated polyvinylchloride, polyvinylfluoride, ethylene oxide-containing polymer, polyvinylpyrrolidone, polyurethane, polytetrafluoroethylene, polyvinylidene fluoride, polyethylene, polypropylene, styrene-butadiene rubber, (meth)acrylated styrene-butadiene rubber, epoxy resin, (meth)acrylic resin, polyester resin, and/or nylon, but the present disclosure is not limited thereto.

The conductive material (e.g., electron conductor) may be utilized to provide an electrode with conductivity, and any suitable conductive material without causing chemical change of a battery may be utilized as the conductive material to constitute the battery. The conductive material may include, for example, a carbon-based material such as natural graphite, artificial graphite, carbon black, acetylene black, Ketjen black, carbon fiber, carbon nano-fiber, and carbon nano-tube; a metal powder or metal fiber containing one or more of copper, nickel, aluminum, and silver; a conductive polymer such as a polyphenylene derivative; and/or a (e.g., any suitable) mixture thereof.

Aluminum (Al) may be utilized as the current collector COL1, but the present disclosure is not limited thereto.

### Positive Electrode Active Material

The positive electrode active material in the positive electrode active material layer AML1 may include a compound (e.g., lithiated intercalation compound) that may reversibly intercalate and deintercalate lithium. For example, the positive electrode active material may include at least one kind of composite oxide including lithium and metal that is selected from among cobalt, manganese, nickel, and/or a (e.g., any suitable) combination thereof.

The composite oxide may include lithium transition metal composite oxide, for example, lithium-nickel-based oxide, lithium-cobalt-based oxide, lithium-manganese-based oxide, lithium-iron-phosphate-based compounds, cobalt-free nickel-manganese-based oxide, and/or a (e.g., any suitable) combination thereof.

For example, the positive electrode active material may include a compound expressed by one selected from among chemical formulae listed below. LiₐA_{1-b}X_{b}O_{2-c}D_{c}, where 0.90≤a≤1.8, 0≤b≤0.5, and 0≤c≤0.05; LiₐMn_{2-bXb}O_{4-c}D_{c}, where 0.90≤a≤1.8, 0≤b≤0.5, and 0≤c≤0.05; LiₐNi_{1-b-c}Co_{b}X_{c}O_{2-α}D_{α}, where 0.90≤a≤1.8, 0≤b≤0.5, 0≤c≤0.5, and 0<α<2; LiₐNi_{1-b-c}Mn_{b}X_{c}O_{2-α}D_{α}, where 0.90≤a≤1.8, 0≤b≤0.5, 0≤c≤0.5, and 0<α<2; LiₐNi_{b}Co_{c}L¹_{d}GₑO₂, where 0.90≤a≤1.8, 0≤b≤0.9, 0≤c≤0.5, 0≤d≤0.5, and 0≤e≤0.1; LiₐNiG_{b}O₂, where 0.90≤a≤1.8 and 0.001≤b≤0.1; LiₐCoG_{b}O₂, where 0.90≤a≤1.8 and 0.001≤b≤0.1; LiₐMn_{1-b}G_{b}O₂, where 0.90≤a≤1.8 and 0.001≤b≤0.1; LiₐMn₂G_{b}O₄, where 0.90≤a≤1.8 and 0.001≤b≤0.1; LiₐMn_{1-g}G_{g}PO₄, where 0.90≤a≤1.8 and 0≤g≤0.5; Li_{(3-f)}Fe₂(PO₄)₃, where 0≤f≤2; LiₐFePO₄, where 0.90≤a≤1.8.

In the chemical formulae above, A may be nickel (Ni), cobalt (Co), manganese (Mn), and/or a (e.g., any suitable) combination thereof, X may be aluminum (Al), Ni, Co, Mn, chromium (Cr), iron (Fe), magnesium (Mg), strontium (Sr), vanadium (V), a rare-earth element, and/or a (e.g., any suitable) combination thereof. D may be oxygen (O), fluorine (F), sulfur (S), phosphorus (P), and/or a (e.g., any suitable) combination thereof. G may be Al, Cr, Mn, Fe, Mg, lanthanum (La), cerium (Ce), Sr, V, and/or a (e.g., any suitable) combination thereof. L¹ may be Mn, Al, and/or a (e.g., any suitable) combination thereof.

For example, the positive electrode active material may be a high-nickel-based positive electrode active material having a nickel amount of equal to or greater than about 80 mol%, equal to or greater than about 85 mol%, equal to or greater than about 90 mol%, equal to or greater than about 91 mol%, or equal to or greater than about 94 mol%, or equal to or less than about 99 mol% relative to 100 mol% of total moles of metal of the lithium transition metal composite oxide devoid of (e.g., excluding) lithium in the lithium transition metal composite oxide. The high-nickel-based positive electrode active material may achieve high capacity and thus may be applied to a high-capacity and high-density rechargeable lithium battery.

### Negative Electrode 20

The negative electrode 20 for a rechargeable lithium battery may include a current collector COL2 and a negative electrode active material layer AML2 positioned on the current collector COL2. The negative electrode active material layer AML2 may include a negative electrode active material and may further include a binder and/or a conductive material.

For example, the negative electrode active material layer AML2 may include a negative electrode active material of about 90 wt% to about 99 wt%, a binder of about 0.5 wt% to about 5 wt%, and a conductive material of about 0 wt% to about 5 wt% based on 100 wt% of a total weight of the negative electrode active material layer AML2.

The binder may improve an attachment of negative electrode active material particles to each other, and may also improve an attachment of the negative electrode active material to the current collector COL2. The binder may include a non-aqueous binder, an aqueous binder, a dry binder, and/or a (e.g., any suitable) combination thereof.

The non-aqueous binder may include polyvinyl chloride, carboxylated polyvinyl chloride, polyvinyl fluoride, ethylene propylene copolymer, polystyrene, polyurethane, polytetrafluoroethylene, polyvinylidene fluoride, polyethylene, polypropylene, polyamide imide, polyimide, and/or a (e.g., any suitable) combination thereof.

The aqueous binder may include styrene-butadiene rubber, (meth)acrylated styrene-butadiene rubber, (meth)acrylonitrile-butadiene rubber, (meth)acrylic rubber, butyl rubber, fluoro elastomer, polyethylene oxide, polyvinyl pyrrolidone, polyepichlorohydrin, polyphosphazene, poly(meth)acrylonitrile, ethylene propylene diene copolymer, polyvinyl pyridine, chlorosulfonated polyethylene, latex, polyester resin, (meth)acrylic resin, phenolic resin, epoxy resin, polyvinyl alcohol, and/or a (e.g., any suitable) combination thereof.

If (e.g., when) an aqueous binder is utilized as the negative electrode binder, a cellulose-based compound capable of providing viscosity may further be included. The cellulose-based compound may include one or more of carboxymethyl cellulose, hydroxypropylmethyl cellulose, methyl cellulose, and/or alkali metal salts thereof. The alkali metal may include sodium (Na), potassium (K), and/or lithium (Li).

The dry binder may include a fibrillizable polymer material, for example, polytetrafluoroethylene, polyvinylidene fluoride, polyvinylidene fluoride-hexafluoropropylene copolymer, polyethylene oxide, and/or a (e.g., any suitable) combination thereof.

The conductive material (e.g., electron conductor) may be utilized to provide an electrode with conductivity, and any suitable conductive material without causing chemical change of a battery may be utilized as the conductive material to constitute the battery. For example, the conductive material may include a carbon-based material, such as natural graphite, artificial graphite, carbon black, acetylene black, Ketjen black, carbon fiber, carbon nano-fiber, and/or carbon nano-tube; a metal powder or metal fiber including one or more of copper, nickel, aluminum, and/or silver; a conductive polymer, such as a polyphenylene derivative; and/or a (e.g., any suitable) mixture thereof.

The current collector COL2 may include a copper foil, a nickel foil, a stainless-steel foil, a titanium foil, a nickel foam, a copper foam, a polymer substrate coated with a conductive metal, and/or a (e.g., any suitable) combination thereof.

### Negative Electrode Active Material

The negative electrode active material in the negative electrode active material layer AML2 may include a material that may reversibly intercalate and deintercalate lithium ions, lithium metal, a lithium metal alloy, a material that may dope and de-dope lithium, or transition metal oxide.

The material that may reversibly intercalate and deintercalate lithium ions may include a carbon-based negative electrode active material, for example, crystalline carbon, amorphous carbon, and/or a (e.g., any suitable) combination thereof. For example, the crystalline carbon may include graphite, such as non-shaped (e.g., not having a form or shape), sheet-shaped (e.g., in a shape of a sheet), flake-shaped (e.g., in a shape of a flake), sphere-shaped (e.g., in a shape of a sphere), or fiber-shaped (e.g., in a shape of a fiber) natural or artificial graphite, and the amorphous carbon may include soft carbon, hard carbon, mesophase pitch carbon, and/or calcined coke.

The lithium metal alloy may include an alloy of lithium and metal that is selected from among Na, K, rubidium (Rb), cesium (Cs), francium (Fr), beryllium (Be), Mg, calcium (Ca), Sr, silicon (Si), antimony (Sb), lead (Pb), lanthanide (In), zinc (Zn), barium (Ba), radium (Ra), germanium (Ge), Al, and tin (Sn).

The material that may dope and de-dope lithium may include a Si-based negative electrode active material and/or a Sn-based negative electrode active material. The Si-based negative electrode active material may include silicon, silicon-carbon composite, SiOx (where 0<x≤2), Si-Q alloy (where Q is alkali metal, alkaline earth metal, Group 13 element, Group 14 element (except for Si), Group 15 element, Group 16 element, transition metal, a rare-earth element, and/or a (e.g., any suitable) combination thereof), and/or a (e.g., any suitable) combination thereof. The Sn-based negative electrode active material may include Sn, SnOx (where 0<x≤2), e.g., SnO₂, a Sn-based alloy, and/or a combination thereof.

The silicon-carbon composite may be a composite of silicon and amorphous carbon. In one or more embodiments, the silicon-carbon composite may have a structure in which the amorphous carbon is coated on a surface of the silicon particle. For example, the silicon-carbon composite may include a secondary particle (core) in which primary silicon particles are assembled, and an amorphous carbon coating layer (shell) positioned on a surface of the secondary particle. The amorphous carbon may also be positioned between the primary silicon particles, and for example, the primary silicon particles may be coated with the amorphous carbon. The secondary particles may be present dispersed in an amorphous carbon matrix.

The silicon-carbon composite may further include crystalline carbon. For example, the silicon-carbon composite may include a core including crystalline carbon and silicon particles, and may also include an amorphous carbon coating layer positioned on a surface of the core.

The Si-based negative electrode active material or the Sn-based negative electrode active material may be utilized in combination with a carbon-based negative electrode active material.

### Separator 30

Based on type or kind of the rechargeable lithium battery, the separator 30 may be present between positive electrode 10 and the negative electrode 20. The separator 30 may include one or more of polyethylene, polypropylene, and/or polyvinylidene fluoride, and the separator 30 may have a multi-layered separator, such as a polyethylene/polypropylene bi-layered separator, a polyethylene/polypropylene/polyethylene tri-layered separator, and/or a polypropylene/polyethylene/polypropylene tri-layered separator.

The separator 30 may include a porous substrate and a coating layer positioned on a surface (e.g., one or opposite (e.g., both of) surfaces) of the porous substrate, which coating layer may include an organic material, an inorganic material, and/or a (e.g., any suitable) combination thereof.

The porous substrate may be a polymer layer including one selected from among polyolefin such as polyethylene and polypropylene, polyester such as polyethylene terephthalate and polybutylene terephthalate, polyacetal, polyamide, polyimide, polycarbonate, polyetherketone, polyaryletherketone, polyetherimide, polyamideimide, polybenzimidazole, polyethersulfone, polyphenyleneoxide, cyclic olefin copolymer, polyphenylenesulphide, polyethylene naphthalate, glass fiber, polytetrafluoroethylene (e.g., Teflon^{®}), and/or a copolymer or mixture including two or more thereof.

The organic material may include a polyvinylidenefluoride-based copolymer and/or a (meth)acrylic copolymer.

The inorganic material may include an inorganic particle selected from among Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, Boehmite, and/or a (e.g., any suitable) combination thereof, but the present disclosure is not limited thereto.

The organic material and the inorganic material may be present mixed in one coating layer, or may be present as a stack of a coating layer including the organic material and a coating layer including an inorganic material.

### Electrolyte ELL

The electrolyte ELL for the rechargeable lithium battery may include a non-aqueous organic solvent and a lithium salt.

The non-aqueous organic solvent may serve as a medium for transmitting ions that participate in an electrochemical reaction of the battery.

The non-aqueous organic solvent may include a carbonate-based solvent, an ester-based solvent, an ether-based solvent, a ketone-based solvent, an alcohol-based solvent, an aprotic solvent, and/or a (e.g., any suitable) combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), and/or butylene carbonate (BC).

The ester-based solvent may include methyl acetate, ethyl acetate, n-propyl acetate, dimethyl acetate, methyl propionate, ethyl propionate, decanolide, mevalonolactone, valerolactone, and/or caprolactone.

The ether-based solvent may include dibutyl ether, tetraglyme, diglyme, dimethoxyethane, 2-methyltetrahydrofuran, 2.5-dimethyltetrahydrofuran, and/or tetrahydrofuran. The ketone-based solvent may include cyclohexanone. The alcohol-based solvent may include ethyl alcohol and/or isopropyl alcohol. The aprotic solvent may include one or more nitriles such as R-CN (where R may be a hydrocarbon group having a C2 to C20 linear, branched, and/or cyclic structure, and R may include a double bond, an aromatic ring, or an ether group); one or more amides such as dimethylformamide; one or more dioxolanes such as 1,3-dioxolane or 1.4-dioxolane; and/or one or more sulfolanes.

The non-aqueous organic solvent may be utilized alone or in a mixture of two or more substances.

In addition, if (e.g., when) a carbonate-based solvent is utilized, a cyclic carbonate and a chain carbonate may be mixed and utilized, and the cyclic carbonate and the chain carbonate may be mixed in a volume ratio of about 1:1 to about 1:9.

The lithium salt may be a material that is dissolved in the non-aqueous organic solvent to serve as a supply source of lithium ions in a battery, and may play a role in enabling a basic operation of a rechargeable lithium battery and in promoting the movement of lithium ions between positive and negative electrodes. The lithium salt may include, for example, at least one selected from among LiPF₆, LiBF₄, LiSbF₆, LiAsF₆, LiClO₄, LiAlO₂, LiAlCl₄, LiPO₂F₂, LiCl, Lil, LiN(SO₃C₂F₅)₂, Li(FSO₂)₂N (lithium bis(fluorosulfonyl)imide, LiFSI), LiC₄F₉SO₃, LiN(CₓF₂ₓ₊₁SO₂)(C_{y}F_{2y+1}SO₂) (where x and y are integers between 1 to 20), lithium trifluoromethane sulfonate, lithium tetrafluoroethanesulfonate, lithium difluorobis(oxalato)phosphate (LiDFBOP), and/or lithium bis(oxalato)borate (LiBOB)

### Rechargeable Lithium Battery

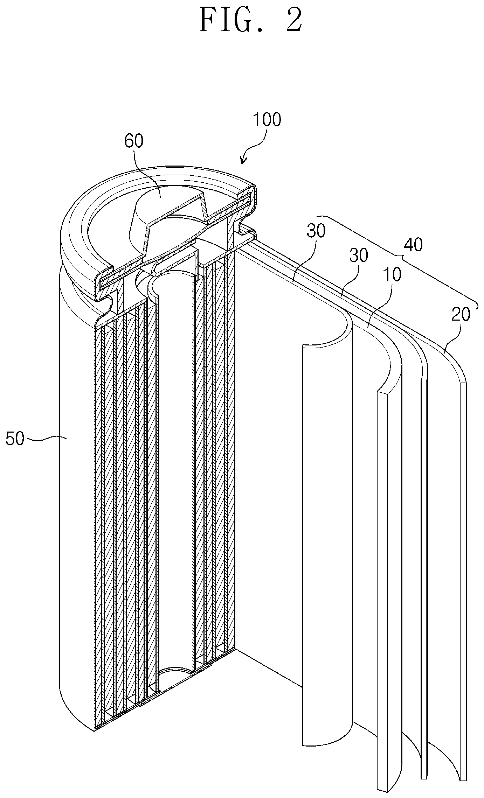

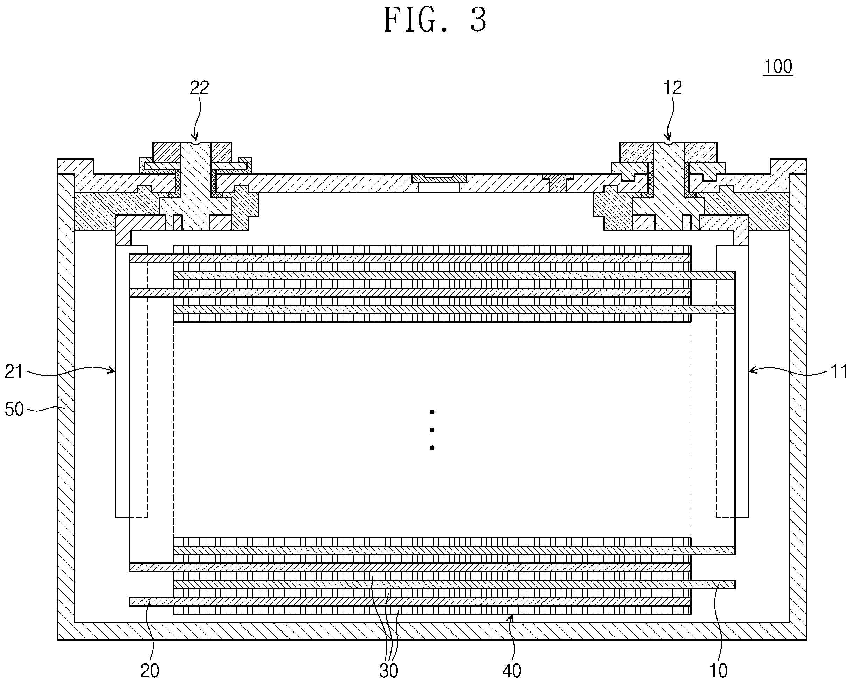

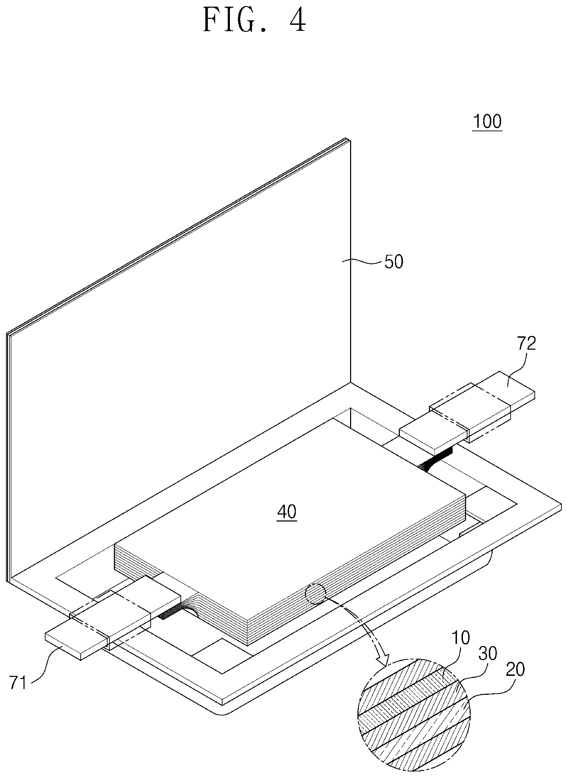

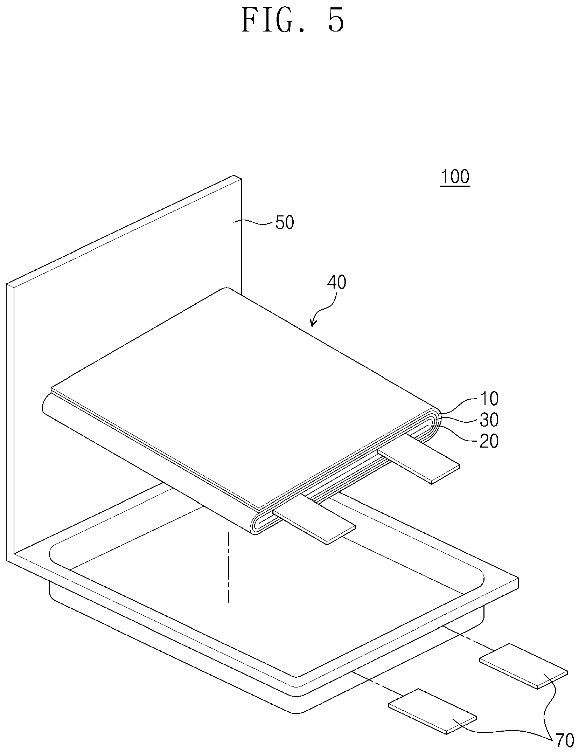

Based on a shape of a rechargeable lithium battery, the rechargeable lithium battery may be classified into cylindrical, prismatic, pouch, and coin types (kinds). FIG. 2 illustrates a simplified diagram showing a cylinder-type or kind rechargeable lithium battery. FIGS. 3 to 5 illustrate simplified diagrams each showing a rechargeable lithium battery according to one or more embodiments, FIG. 3 showing a prismatic battery, and FIGS. 4 and 5 showing pouch-type or kind batteries. Referring to FIGS. 2 to 4, a rechargeable lithium battery 100 may include an electrode assembly 40 in which a separator 30 is interposed between a positive electrode 10 and a negative electrode 20, and may also include a casing 50 in which the electrode assembly 40 is accommodated. The positive electrode 10, the negative electrode 20, and the separator 30 may be impregnated in an electrolyte. The rechargeable lithium battery 100 may include a sealing member 60 that seals the casing 50 as illustrated in FIG. 2. In addition, as illustrated in FIG. 3, the rechargeable lithium battery 100 may include a positive electrode lead tab 11, a positive electrode terminal 12, a negative electrode lead tab 21, and a negative electrode terminal 22. As shown in FIGS. 4 and 5, the rechargeable lithium battery 100 may include an electrode tab 70, or a positive electrode tab 71 and a negative electrode tab 72, which electrode tab 70 serves as an electrical path for externally inducing a current generated in the electrode assembly 40.

### Electrode Stacking Apparatus

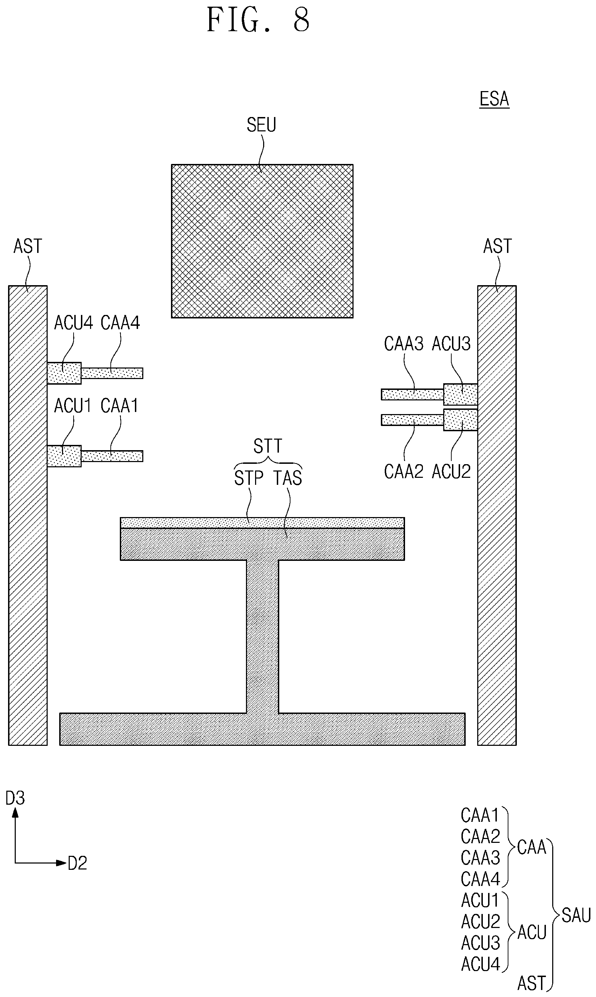

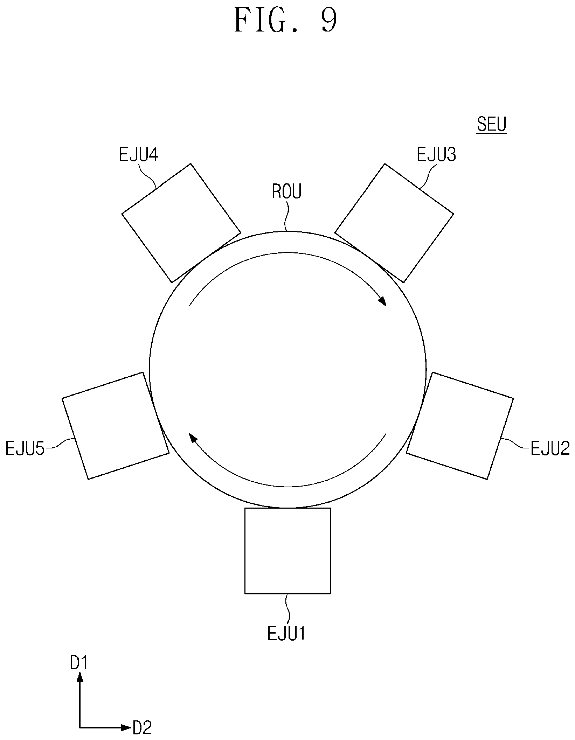

FIG. 8 illustrates a front view showing an electrode stacking apparatus according to one or more embodiments of the present disclosure. FIG. 9 illustrates a plan view showing a sheet supply unit according to one or more embodiments of the present disclosure.

Referring to FIG. 8, an electrode stacking apparatus ESA may include a sheet supply unit SEU, a sheet alignment unit SAU, and a stacking table STT.

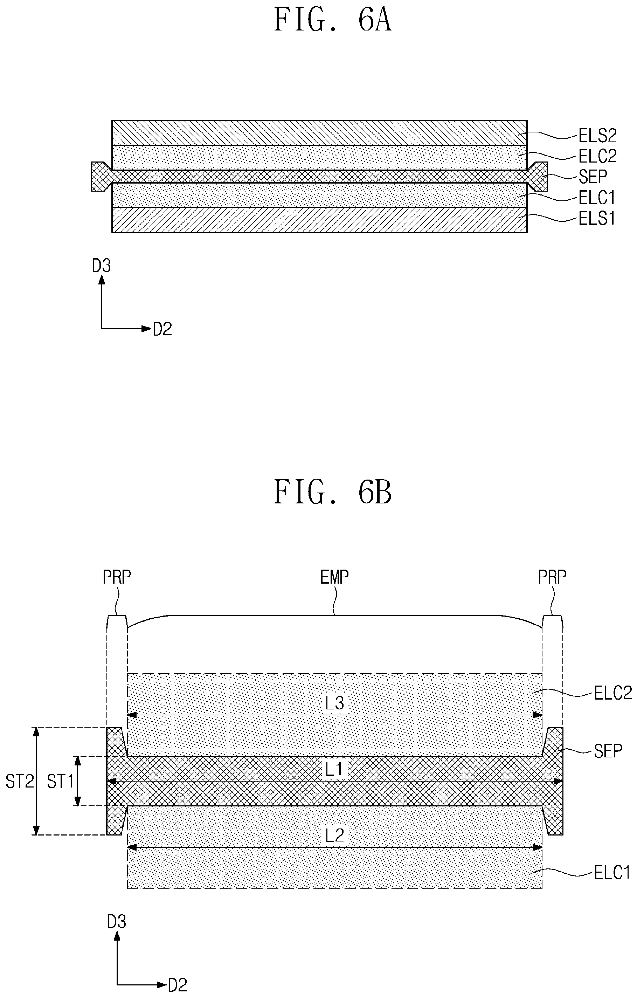

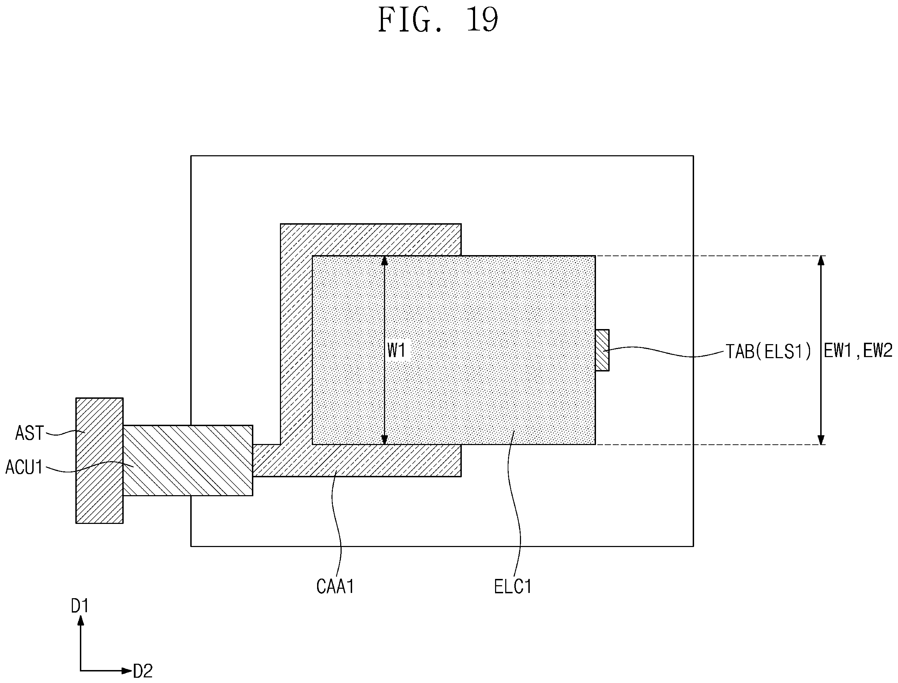

The sheet supply unit SEU may be configured such that a first electrode substrate ELS1, a first electrode mixture ELC1, a separator SEP, a second electrode mixture ELC2, and a second electrode substrate ELS2 are sequentially provided (stacked) on the stacking stable STT (see FIG. 6A). In one or more embodiments, each of the first electrode substrate ELS1, the first electrode mixture ELC1, the separator SEP, the second electrode mixture ELC2, and the second electrode substrate ELS2 may be notched (e.g., cut) in the form of a sheet. Each of the first electrode substrate ELS1 and the second electrode substrate ELS2 may further include an electrode tab TAB (see FIG. 19).

For example, as shown in FIG. 9, the sheet supply unit SEU may include a rotary unit ROU and first to fifth ejection units EJU1 to EJU5. The first to fifth ejection units EJU1 to EJU5 may be clockwise arranged around the rotary unit ROU. The rotary unit ROU may rotate in a clockwise or counterclockwise direction. The rotation of the rotary unit ROU may sequentially place the first to fifth ejection units EJU1 to EJU5 on the stacking table STT.

The first ejection unit EJU1 may be configured to eject the first electrode substrate ELS1. The second ejection unit EJU2 may be configured to eject the first electrode mixture ELC1. The third ejection unit EJU3 may be configured to eject the separator SEP. The fourth ejection unit EJU4 may be configured to eject the second electrode mixture ELC2. The fifth ejection unit EJU5 may be configured to eject the second electrode substrate ELS2. Each of the first to fifth ejection units EJU1 to EJU5 may include components of an ejection unit EJU which will be discussed.

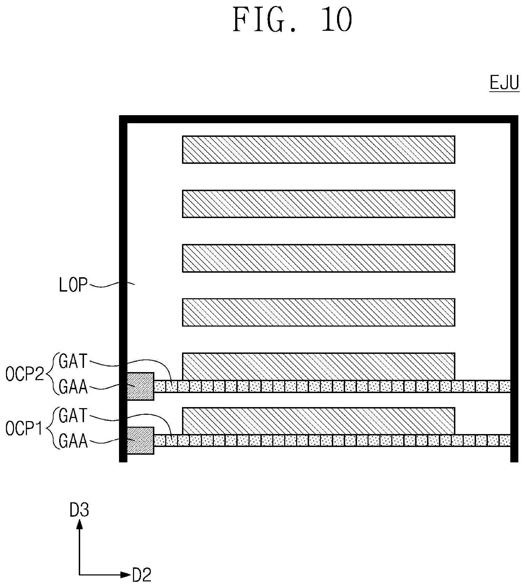

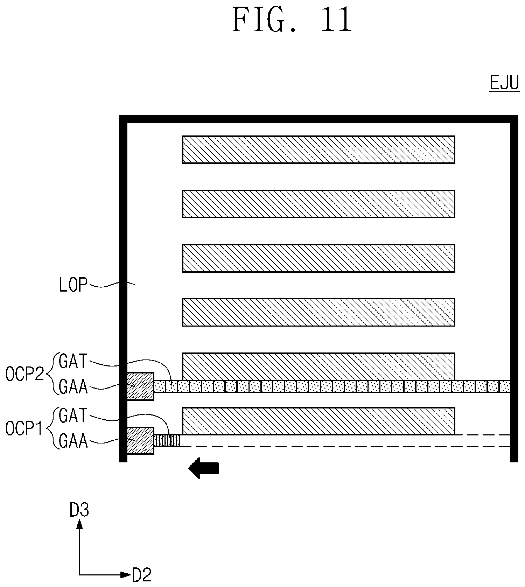

FIGS. 10 and 11 illustrate cross-sectional views each showing an ejection unit EJU according to one or more embodiments of disclosure. Referring to FIG. 10, the ejection unit EJU may include a load part LOP in which a sheet of material is loaded. The sheet of material may be one selected from among the first electrode substrate ELS1, the first electrode mixture ELC1, the separator SEP, the second electrode mixture ELC2, and/or the second electrode substrate ELS2.

Referring to FIGS. 10 and 11, in one or more embodiments, the ejection unit EJU may include a first open-and-close (e.g., open/close) part OCP1 (e.g., a part that is able be opened and closed). The first open-and-close part OCP1 may constitute a bottom surface of the ejection unit EJU. The first open-and-close part OCP1 may be configured to eject one by one the sheets of material in the ejection unit EJU. For example, the first open-and-close part OCP1 may include a gate GAT and a gate actuator GAA. The gate GAT may be configured to open and close the bottom surface of the ejection unit EJU by refers to of the gate actuator GAA. Referring to FIG. 11, if (e.g., when) the first open-and-close part OCP1 is opened, the sheet of material in a lower (e.g., lowermost) portion of the ejection unit EJU may be ejected downwards. For example, the gate GAT may be provided in the form of a sliding folding door where the first open-and-close part OCP1 is opened by folding the gate GAT and closed by unfolding the gate GAT.

In one or more embodiments, the ejection unit EJU may further include a second open-and-close part OCP2. The second open-and-close part OCP2 may be positioned over the first open-and-close part OCP1. Similar to the first open-and-close part OCP1, the second open-and-close part OCP2 may include a gate and a gate actuator. The second open-and-close part OCP2 may operate independently of the first open-and-close part OCP1. For example, if (e.g., when) the first open-and-close part OCP1 is opened, the second open-and-close part OCP2 may be closed. Therefore, the ejection unit EJU may eject one at a time of the sheets of material.

The ejection unit EJU may further include third to Nth open-and-close parts. The symbol N may be a natural number of equal to or greater than 4. The third to Nth open-and-close parts may be spaced and/or apart (e.g., spaced apart or separated) in a third direction D3 from each other across the sheets of material in the ejection unit EJU. It may thus be possible to reliably prevent or reduce two or more sheets of material from being ejected at once.

The rotary unit ROU may be configured to revolve the first to fifth ejection units EJU1 to EJU5 in the clockwise or counterclockwise direction. The rotary unit ROU may sequentially place the first to fifth ejection units EJU1 to EJU5 on the stacking table STT. In one or more embodiments, the rotary unit ROU may include a rotary shaft and a motor that drives the rotary shaft. The first to fifth ejection units EJU1 to EJU5 may revolve about the rotary shaft.

The stacking table STT may include a stacking plate STP on which are stacked targets that are ejected from the sheet supply unit SEU. The stacking table STT may further include a table support TAS configured to support the stacking plate STP.

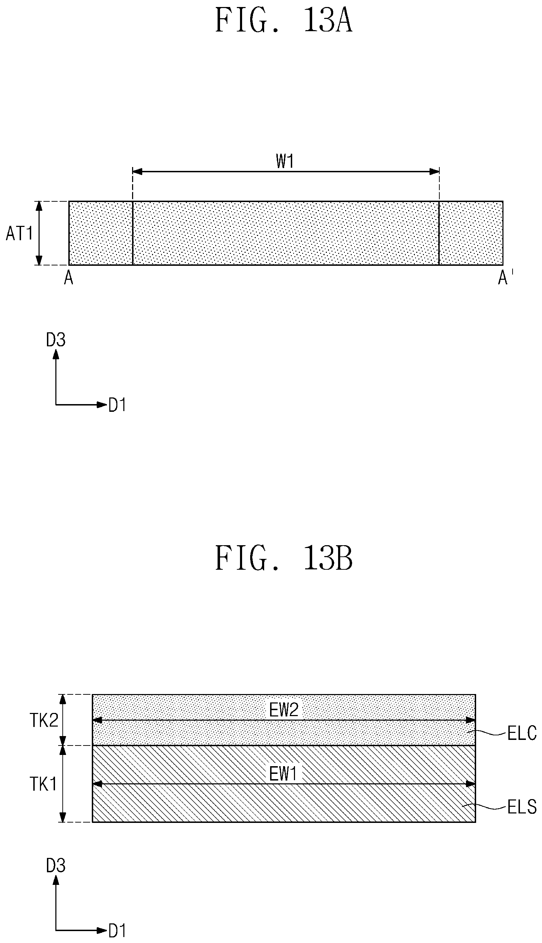

Referring back to FIG. 8, in one or more embodiments, the electrode stacking apparatus ESA may include the sheet alignment unit SAU. The sheet alignment unit SAU may be configured to align and fix an electrode substrate (see ELS of FIG. 13B) and an electrode mixture (see ELC of FIG. 13B) that are stacked on the stacking table STT. For example, the sheet alignment unit SAU may achieve alignment and fixation by gripping both of the electrode substrate ELS provided on the stacking table STT and the electrode mixture ELC stacked on the electrode substrate ELS (e.g., simultaneously). That is, the sheet alignment unit SAU may achieve alignment and fixation by concurrently gripping both the electrode substrate (ELS) on the stacking table (STT) and the electrode mixture (ELC) stacked on the electrode substrate (ELS). Thus, it may be possible to correct misalignment of the sheet of material ejected from the ejection unit EJU.

For example, the sheet alignment unit SAU may include a case arm CAA, an actuator ACU, and an alignment support AST. The case arm CAA may include a gripper GRP configured to grip both of an electrode substrate and an electrode mixture (e.g., simultaneously) (i.e., to grip both the electrode substrate and the electrode mixture). The actuator ACU may be configured to drive the case arm CAA to move in a first direction D1 or a second direction D2. The case arm CAA and the actuator ACU may be fixed to the alignment support AST. For example, the case arm CAA may be combined to the actuator ACU, and the actuator ACU may be combined to the alignment support AST.

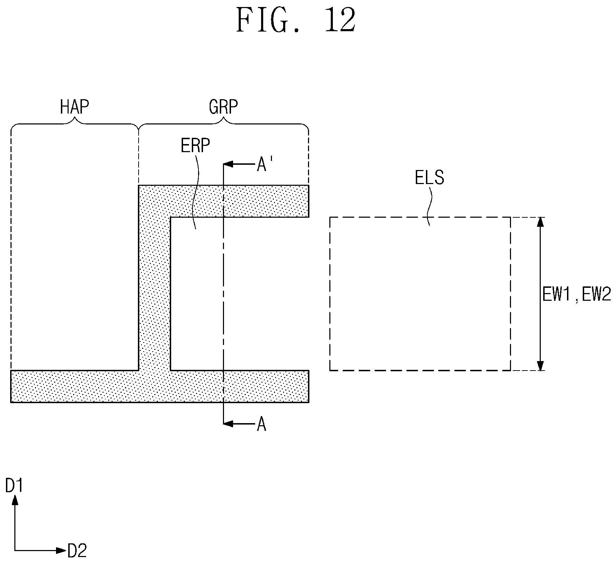

FIG. 12 illustrates a plan view showing the case arm CAA according to one or more embodiments of the present disclosure. FIG. 13A illustrates a cross-sectional view taken along the line A-A' of the case arm CAA depicted in FIG. 12. FIG. 13B illustrates a cross-sectional view showing an electrode substrate and an electrode mixture gripped in an electrode receiving space ERS of the case arm CAA.

Referring to FIGS. 12, 13A, and 13B, the case arm CAA may include a gripper GRP that grips outer lateral surfaces of the electrode substrate ELS and the electrode mixture ELC, and a handle HAP that adjusts a position of the case arm CAA. The gripper GRP may have a shape that is around (e.g., surrounds) lateral surfaces of the electrode substrate ELS and the electrode mixture ELC. For example, the gripper GRP may have a shape that is around (e.g., surrounds) three of four lateral surfaces of a combination of the electrode substrate ELS and the electrode mixture ELC stacked on the electrode substrate ELS. A non-gripped lateral surface of the electrode substrate ELS may be provided with an electrode tab TAB thereon.

Referring back to FIGS. 12 and 13A, the gripper GRP of the case arm CAA may include an electrode receiving space ERS that receives the electrode substrate ELS and the electrode mixture ELC.

In one or more embodiments, the electrode receiving space ERS may have a width W1 in the first direction D1. The electrode substrate ELS may have a width EW1 in the first direction D1. The electrode mixture ELC may have a width EW2 in the first direction D1. The width W1 may be substantially the same as the width EW1. In addition, the width W1 may be substantially the same as the width EW2. The case arm CAA may grip outer boundaries of the electrode substrate ELS and the electrode mixture ELC.

In one or more embodiments, referring to FIG. 13A, the gripper GRP may have a thickness AT1 in the third direction D3. Referring to FIG. 13B, the electrode substrate ELS may have a thickness TK1 in the third direction D3. The electrode mixture ELC may have a thickness TK2 in the third direction D3. The thickness AT1 may be less than a sum of the thickness TK1 and the thickness TK2. For example, a ratio of the thickness AT1 to a sum of the thickness TK1 and the thickness TK2 (AT1/(TK1+TK2)) may range from about 0.4 to about 0.6. Accordingly, it may be possible to minimize or reduce damage to a separator caused by a case arm in a subsequent pressing process.

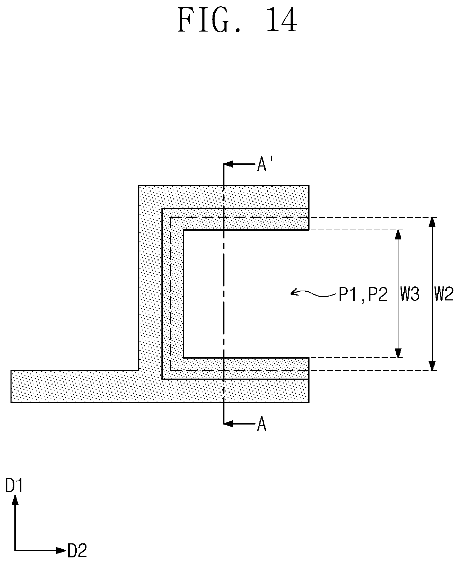

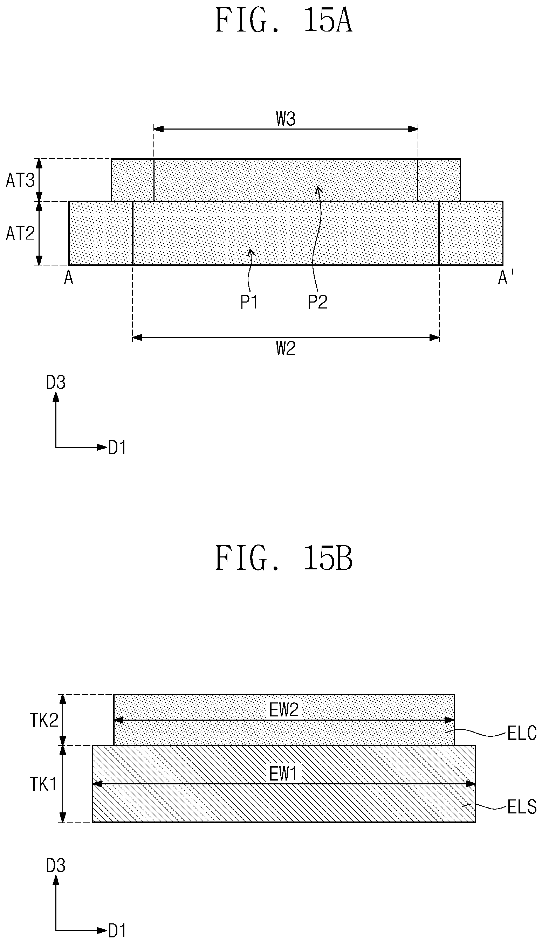

FIG. 14 illustrates a plan view showing a case arm according to one or more embodiments of the present disclosure. FIG. 15A illustrates a cross-sectional view taken along the line A-A' of the case arm depicted in FIG. 14. FIG. 15B illustrates a cross-sectional view showing an electrode substrate and an electrode mixture gripped in the electrode receiving space ERS of the case arm.

Referring to FIGS. 14 and 15A, the case arm CAA may include a gripper GRP and a handle HAP. The electrode receiving space ERS of the gripper GRP may have (include) a first region P1 that receives the electrode substrate ELS and a second region P2 that receives the electrode mixture ELC (i.e., the first region P1 for receiving the electrode substrate ELS and the second region (P2) for receiving the electrode mixture ELC). In one or more embodiments, the first region P1 may have a width W2 in the first direction D1. The second region P2 may have a width W3 in the first direction D1. The width W2 may be greater than the width W3. The electrode substrate ELS may have a width EW1 in the first direction D1. The electrode mixture ELC may have a width EW2 in the first direction D1. The width W1 may be substantially the same as the width EW1. The width W3 may be substantially the same as the width EW2. Thus, the electrode substrate ELS may be gripped in the first region P1, and the electrode mixture ELC may be gripped in the second region P2.

In one or more embodiments, the first region P1 may have a thickness AT2 in the third direction D3. The electrode substrate ELS may have a thickness TK2 in the third direction D3. The thickness AT2 may be less than the thickness TK1. For example, a ratio of the thickness AT2 to the thickness TK1 may range from about 0.4 to about 0.6.

In one or more embodiments, the second region P2 may have a thickness AT3 in the third direction D3. The electrode mixture ELC may have a thickness TK2 in the third direction D3. The thickness AT3 may be less than the thickness TK2. For example, a ratio of the thickness AT3 to the thickness TK2 may range from about 0.4 to about 0.6.

Accordingly, it may be possible to minimize or reduce damage to a separator caused by a case arm in a subsequent pressing process.

The following will describe in more detail a method of manufacturing a rechargeable lithium battery utilizing the electrode stacking apparatus ESA.

### Method of Manufacturing Rechargeable Lithium Battery

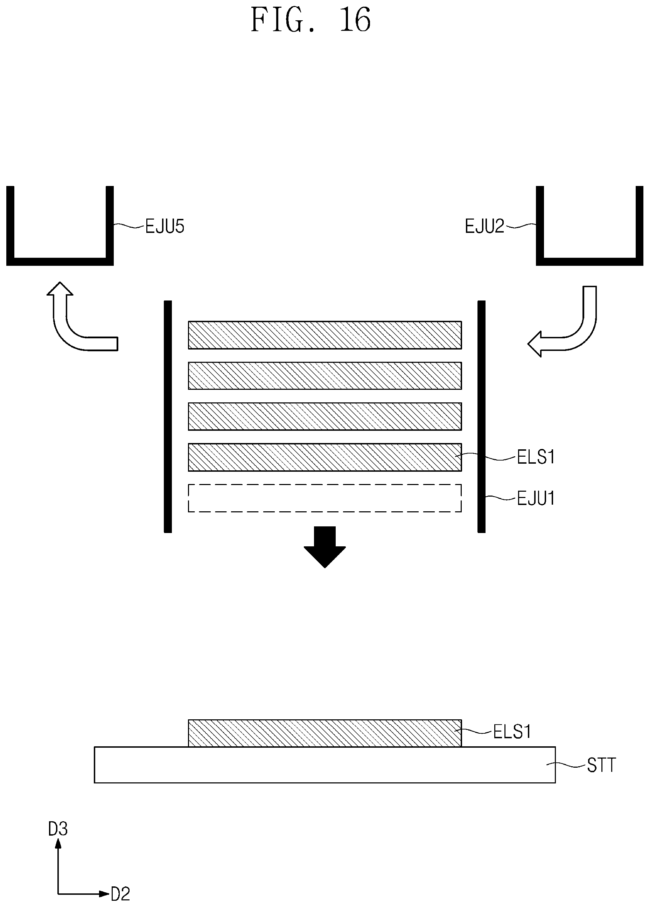

FIGS. 16 to 34 illustrate diagrams showing a method of manufacturing a rechargeable lithium battery according to one or more embodiments of the present disclosure.

In one or more embodiments, a rechargeable lithium battery may be manufactured by sequentially stacking and pressurizing the first electrode substrate ELS1, the first electrode mixture ELC1, the separator SEP, the second electrode mixture ELC2, and the second electrode substrate ELS2.

In one or more embodiments, one selected from among the first electrode substrate ELS1 and the second electrode substrate ELS2 may be the negative electrode current collector COL1 discussed with reference to FIG. 1, and the other selected from among the first electrode substrate ELS1 and the second electrode substrate ELS2 may be the positive electrode current collector COL2 discussed with reference to FIG. 1. In addition, one selected from among the first electrode mixture ELC1 and the second electrode mixture ELC2 may be the positive electrode active material layer AML1 discussed with reference to FIG. 1, and the other selected from among the first electrode mixture ELC1 and the second electrode mixture ELC2 may be the negative electrode active material layer AML2 discussed with reference to FIG. 1. The separator SEP may be the separator 30 discussed with reference to FIG. 1. For example, the first electrode substrate ELS1 may be the negative electrode current collector COL2. The first electrode mixture ELC1 may be the negative electrode active material layer AML2. The second electrode substrate ELS2 may be the positive electrode current collector COL1. The second electrode mixture ELC2 may be the positive electrode active material layer AML1.

In one or more embodiments, the first electrode substrate ELS1, the first electrode mixture ELC1, the separator SEP, the second electrode mixture ELC2, and the second electrode substrate ELS2 may each be notched (e.g., cut) to a sheet to meet (match) a size of a rechargeable lithium battery to be manufactured. Each of the first electrode substrate ELS1 and the second electrode substrate ELS2 may include an electrode tab TAB formed at an end thereof.

In one or more embodiments, the first electrode mixture ELC1 and the second electrode mixture ELC2 may be a free-standing mixture. The free-standing mixture may indicate a mixture that maintains its constant shape by itself without being supported by another substrate and/or the like (i.e., a mixture that maintains its shape independently, without the need for support from another substrate or similar structure). In one or more embodiments, each of the first electrode mixture ELC1 and the second electrode mixture ELC2 may be manufactured by a drying process. For example, the drying process may include preparing a dry mixture by mixing an active material, a conductive material, and a dry binder, coating the dry mixture on a release film, pressing the dry mixture coated in the release film, and removing the release film. The active material may be a negative electrode active material or a positive electrode active material discussed with reference to FIG. 1. The conductive material may be a conductive material discussed with reference to FIG. 1. The dry binder may be, for example, polytetrafluoroethylene (PTFE), but there is no limitation on a kind of the dry binder.

The electrode stacking apparatus ESA may be utilized to perform the stacking process.

Referring to FIGS. 9 and 16, the first electrode substrate ELS1 may be provided on the stacking table STT. The first electrode substrate ELS1 may be ejected from a bottom surface of the first ejection unit EJU1 of the sheet supply unit SEU. For example, the first open-and-close part OCP1 discussed with reference to FIGS. 10 and 11 may be opened to eject the first electrode substrate ELS1 from the bottom surface of the first ejection unit EJU1. At this time, the second open-and-close part OCP2 may be closed. Thus, one or more other first electrode substrates ELS1 may be fixed in the first ejection unit EJU1.

After the ejection of the first electrode substrate ELS1 from the first ejection unit EJU1, the rotary unit ROU of the sheet supply unit SEU may rotate in the clockwise direction. Therefore, the second ejection unit EJU2 may be (e.g., positioned) on the stacking table STT.

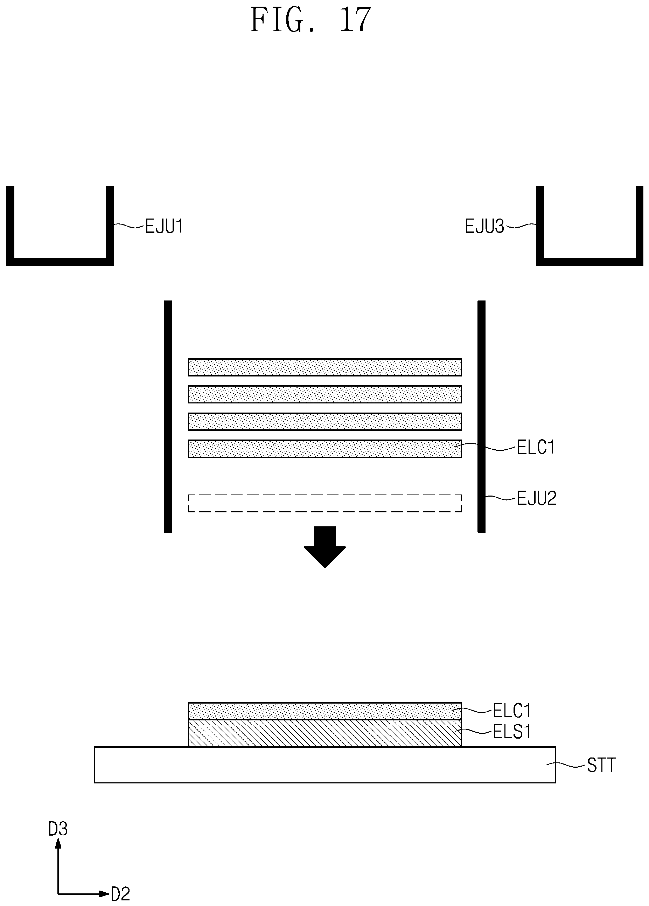

Referring to FIGS. 9 and 17, the first electrode mixture ELC1 may be provided on the first electrode substrate ELS1. The first electrode mixture ELC1 may be ejected from a bottom surface of the second ejection unit EJU2 of the sheet supply unit SEU.

Referring to FIGS. 9, 18, and 19, the sheet alignment unit SAU may align and fix the first electrode substrate ELS1 and the first electrode mixture ELC1 on the first electrode substrate ELS1. For example, a first case arm CAA1 of the sheet alignment unit SAU may grip outer lateral surfaces of the first electrode substrate ELS1 and the first electrode mixture ELC1. The gripper GRP of the first case arm CAA1 may grip outer boundaries of the first electrode substrate ELS1 and the first electrode mixture ELC1. The gripper GRP may grip a portion of a thickness in the third direction D3 of the first electrode substrate ELS1. In addition, the gripper GRP may grip a portion of a thickness in the third direction D3 of the first electrode mixture ELC1.

In one or more embodiments, an electrode tab TAB may be provided on one selected from among four outer lateral surfaces of the first electrode substrate ELS1, which one selected from among four outer lateral surfaces is not gripped by the first case arm CAA1.

A first actuator ACU1 may drive the first case arm CAA1 to move in the first direction D1 or the second direction D2. As the first case arm CAA1 moves while gripping the outer lateral surfaces of the first electrode substrate ELS1 and the first electrode mixture ELC1 on the first electrode substrate ELS1, it may be possible to adjust a position of the first electrode substrate ELS1 and the first electrode mixture ELC1. The first case arm CAA1 may continuously grip the first electrode substrate ELS1 and the first electrode mixture ELC1 whose position adjustment or alignment is completed, and thus the position of the first electrode substrate ELS1 and the first electrode mixture ELC1 may be fixed in a stacking process and a pressing process which will be subsequently performed.

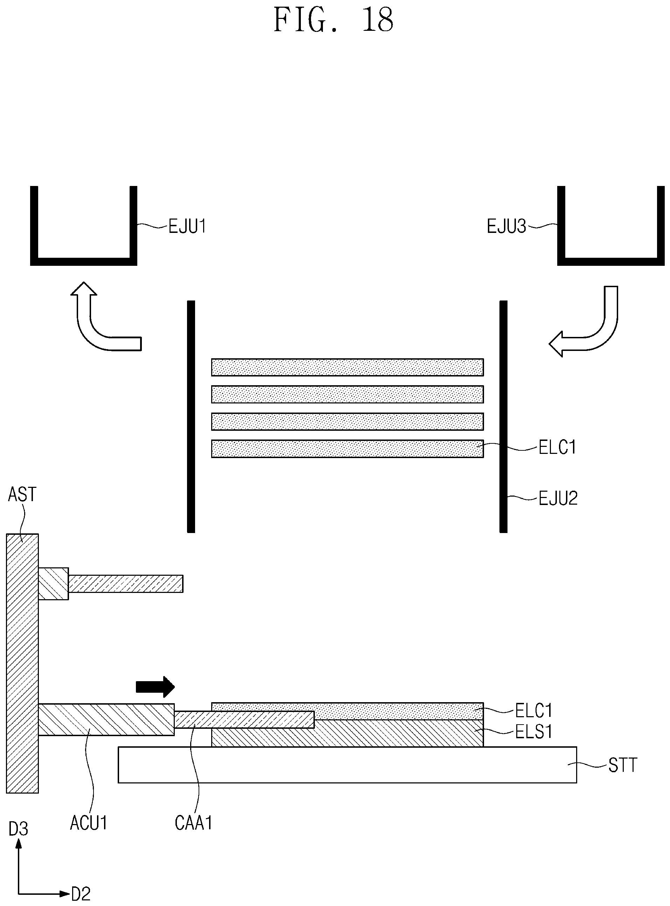

Referring back to FIGS. 9 and 18, the rotary unit ROU of the sheet supply unit SEU may rotate in the clockwise direction. Therefore, the third ejection unit EJU3 may be positioned on the stacking table STT.

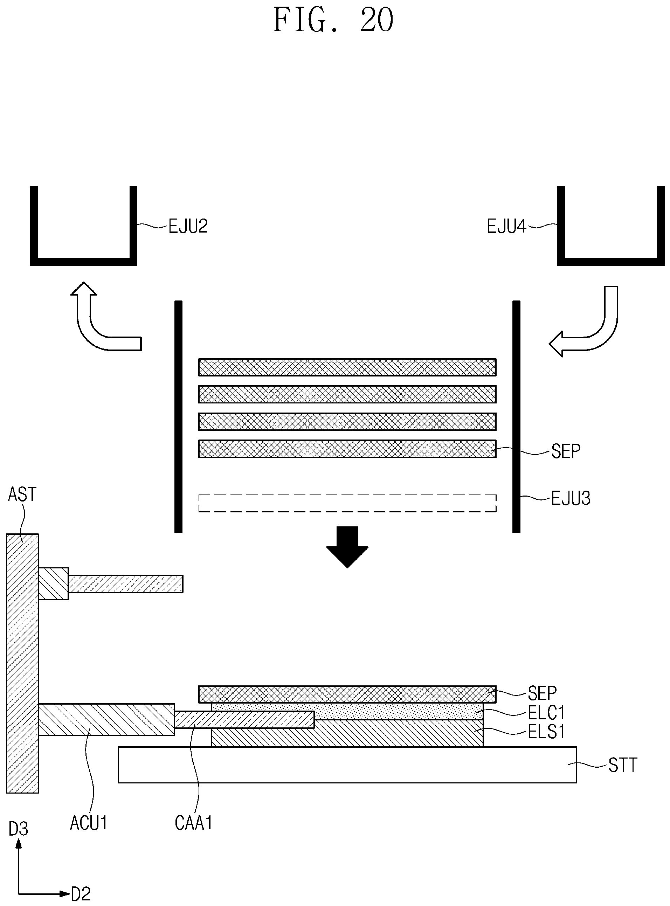

Referring to FIGS. 9 and 20, the separator SEP may be provided on the first electrode mixture ELC1. The separator SEP may be ejected from a bottom surface of the third ejection unit EJU3 of the sheet supply unit SEU. After the ejection of the separator SEP from the third ejection unit EJU3, the rotary unit ROU of the sheet supply unit SEU may rotate in the clockwise direction. Therefore, the fourth ejection unit EJU4 may be positioned on the stacking table STT.

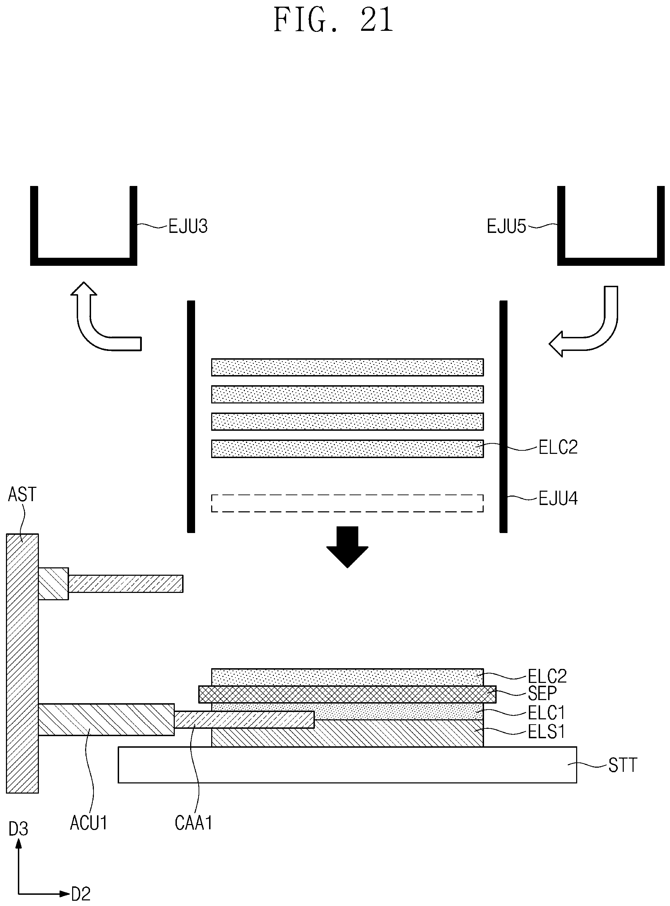

Referring to FIGS. 9 and 21, the second electrode mixture ELC2 may be provided on the separator SEP. The second electrode mixture ELC2 may be ejected from a bottom surface of the fourth ejection unit EJU4 of the sheet supply unit SEU. After the ejection of the second electrode mixture ELC2 from the fourth ejection unit EJU4, the rotary unit ROU of the sheet supply unit SEU may rotate in the clockwise direction. Therefore, the fifth ejection unit EJU5 may be positioned on the stacking table STT.

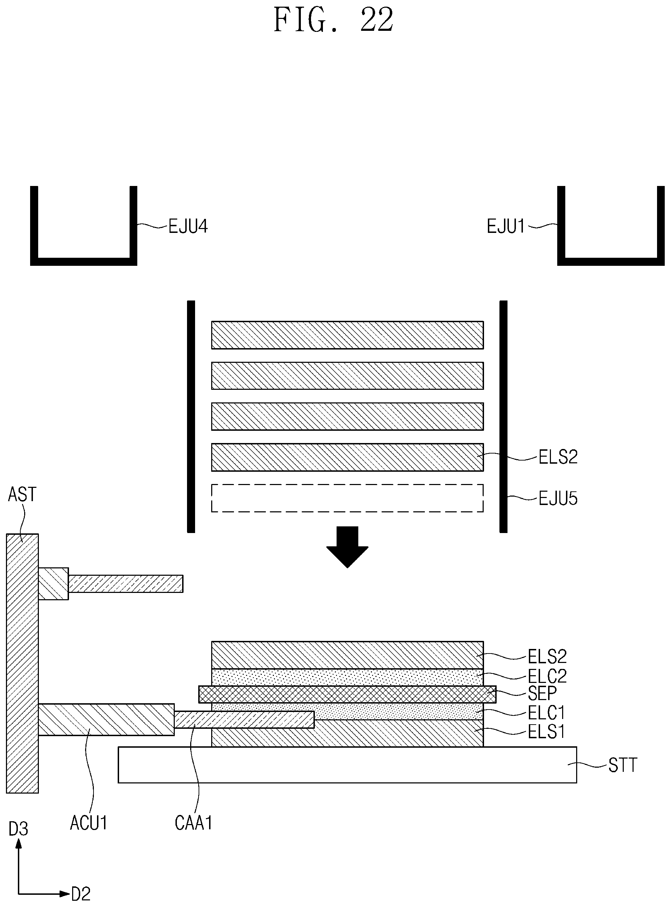

Referring to FIGS. 9 and 22, the second electrode substrate ELS2 may be provided on the second electrode mixture ELC2. The second electrode substrate ELS2 may be ejected from a bottom surface of the fifth ejection unit EJU5 of the sheet supply unit SEU.

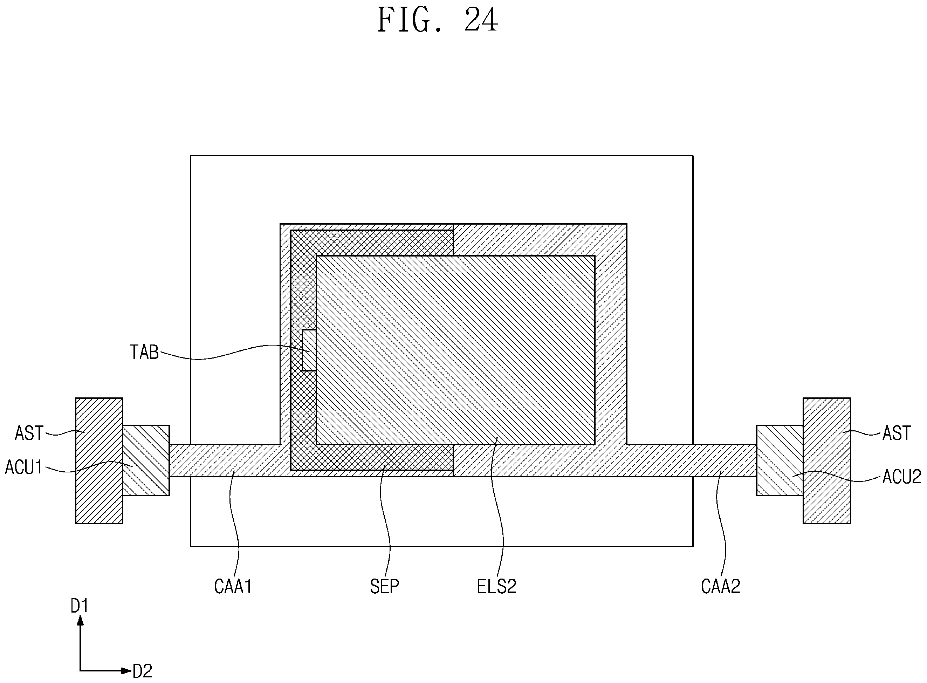

FIG. 24 illustrates a plan view showing that a second case arm CAA2 grips the second substrate mixture ELC2 and the second electrode substrate ELS2 on the second electrode mixture ELC2.

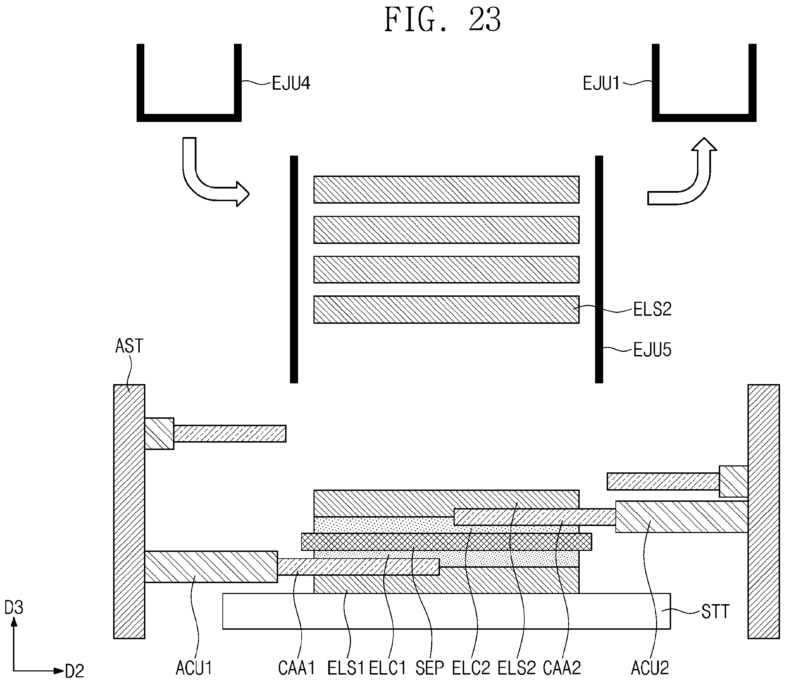

Referring to FIGS. 23 and 24, the sheet alignment unit SAU may align and fix the second electrode mixture ELC2 and the second electrode substrate ELS2 on the second electrode mixture ELC2. For example, the second case arm CAA2 of the sheet alignment unit SAU may grip outer lateral surfaces of the second electrode mixture ELC2 and the second electrode substrate ELS2. For example, the gripper GRP of the second case arm CAA2 may grip outer boundaries of the second electrode mixture ELC2 and the second electrode substrate ELS2. The gripper GRP may grip a portion of a thickness in the third direction D3 of the second electrode substrate ELS2. In addition, the gripper GRP may grip a portion of a thickness in the third direction D3 of the second electrode mixture ELC2.

In one or more embodiments, an electrode tab TAB may be provided on one selected from among four outer lateral surfaces of the second electrode substrate ELS2, which one selected from among four outer lateral surfaces is not gripped by the second case arm CAA2.

A second actuator ACU2 may drive the second case arm CAA2 to move in the first direction D1 or the second direction D2. As the second case arm CAA2 moves while gripping the outer lateral surfaces of the second electrode mixture ELC2 and the second electrode substrate ELS2 on the second electrode mixture ELC2, it may be possible to adjust a position of the second electrode mixture ELC2 and the second electrode substrate ELS2. The second case arm CAA2 may continuously grip the second electrode mixture ELC2 and the second electrode substrate ELS2 whose position adjustment or alignment is completed, and thus the position of the second electrode mixture ELC2 and the second electrode substrate ELS2 may be fixed in a stacking process and a pressing process which will be subsequently performed.

The pressing process may be performed on a stack structure in which the first electrode substrate ELS1, the first electrode mixture ELC1, the separator SEP, the second electrode mixture ELC2, and the second electrode substrate ELS2 are sequentially stacked. In one or more embodiments, the pressing process may be performed after the second electrode mixture ELC2, the separator SEP, the first electrode mixture ELC1, and the first electrode substrate ELS1 are further sequentially stacked on the stack structure.

One or more embodiments of the present disclosure will be described with reference to FIGS. 23, 25, and 26.

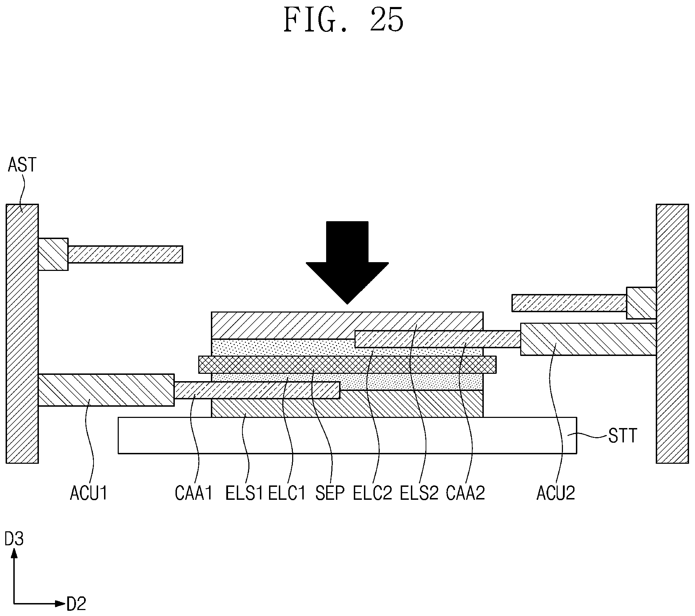

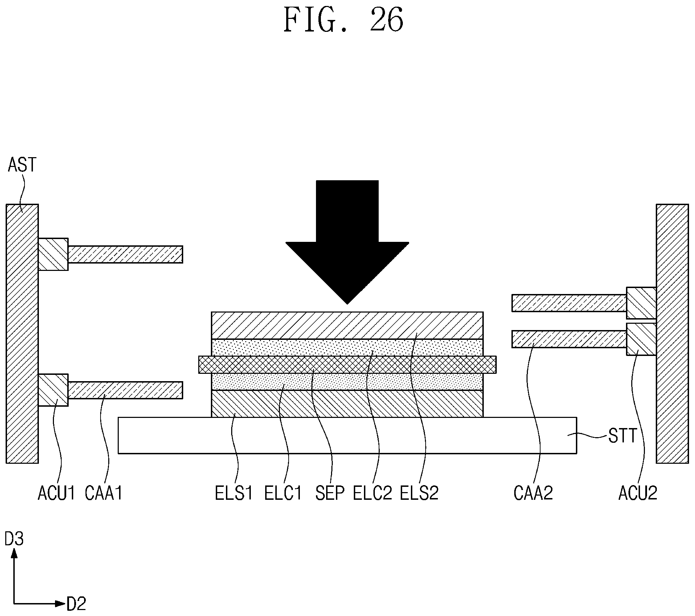

Referring to FIGS. 25 and 26, a pressing process may be performed on the stack structure in which the first electrode substrate ELS1, the first electrode mixture ELC1, the separator SEP, the second electrode mixture ELC2, and the second electrode substrate ELS2 are sequentially stacked. The pressing process may be performed in two steps.

Referring to FIG. 25, a first pressing process may be performed in a state where the first case arm CAA1 fixes the first electrode substrate ELS1 and the first electrode mixture ELC1. In addition, the first pressing process may be performed in a state where the second case arm CAA2 fixes the second electrode substrate ELS2 and the second electrode mixture ELC2. Referring to FIG. 26, a second pressing process may be performed in a state where the first case arm CAA1 and the second case arm CAA2 release their fixation.

The first pressing process and the second pressing process are not especially limited, and may be performed utilizing a pressing pad and/or the like.

A pressure applied to the stack structure in the first pressing process may be less than a pressure applied to the stack structure in the second pressing process. In one or more embodiments, the pressure applied to the stack structure in the first pressing process may range from about 0.1 MPa to about 0.2 MPa. The pressure applied to the stack structure in the second pressing process may range from about 0.4 MPa to about 1 MPa. That is, the pressure in the first pressing process may range from about 0.1 MPa to about 0.2 MPa, while the pressure in the second pressing process may range from about 0.4 MPa to about 1 MPa. The stack structure may be pressurized to cause a difference in thickness between a buried part EMP and a protruding part PRP of the separator SEP which will be discussed.

The first electrode substrate ELS1, the first electrode mixture ELC1, the separator SEP, the second electrode mixture ELC2, and the second electrode substrate ELS2 may be temporarily joined by the first pressing process and fixed at their position (e.g., the position of the first electrode substrate ELS1, the first electrode mixture ELC1, the separator SEP, the second electrode mixture ELC2, and the second electrode substrate ELS2), and may be completely joined by the second pressing process.

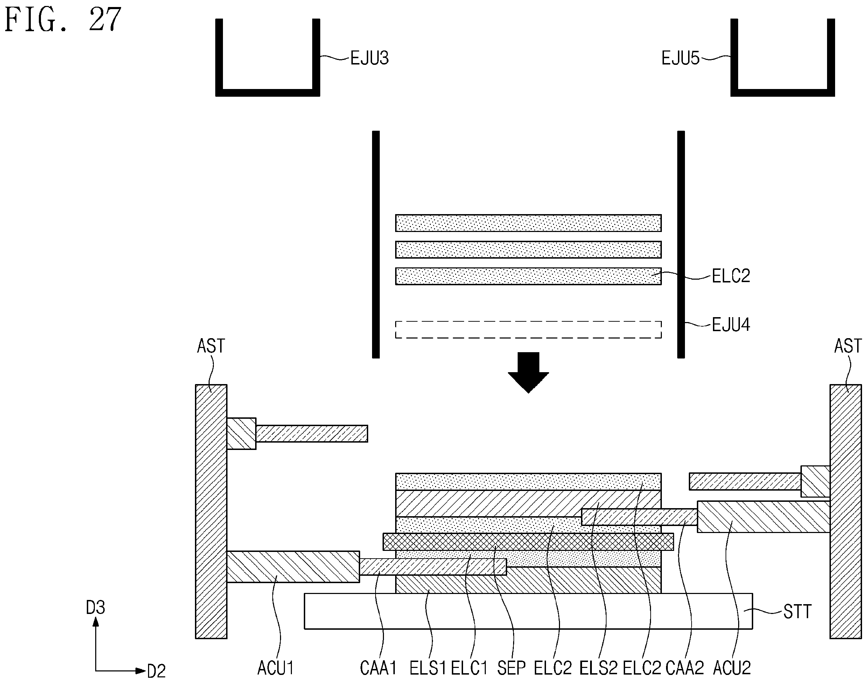

Some embodiments will be discussed with reference to FIGS. 23 and 27 to 34. Referring back to FIG. 23, the rotary unit ROU of the sheet supply unit SEU may rotate in the counterclockwise direction. Therefore, the fourth ejection unit EJU4 may be positioned back to the stacking table STT. Referring to FIG. 27, the second electrode mixture ELC2 may be ejected from the fourth ejection unit EJU4. Thus, the second electrode mixture ELC2 may be provided on the second electrode substrate ELS2.

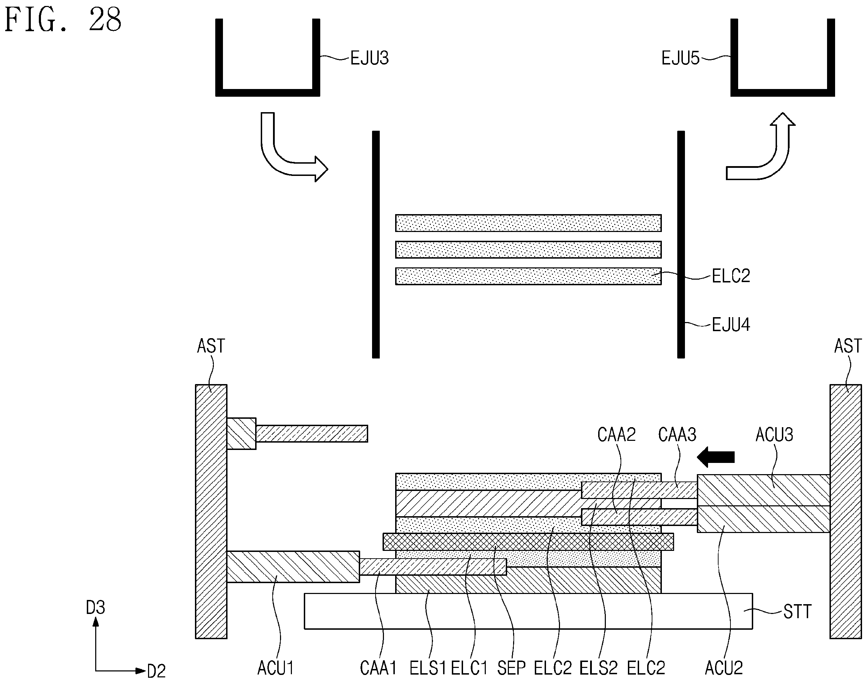

Referring to FIG. 28, the sheet alignment unit SAU may align and fix the second electrode substrate ELS2 and the second electrode mixture ELC2 on the second electrode substrate ELS2. For example, a third case arm CAA3 of the sheet alignment unit SAU may grip outer lateral surfaces of the second electrode substrate ELS2 and the second electrode mixture ELC2 on the second electrode substrate ELS2. For example, the gripper GRP of the third case arm CAA3 may grip outer boundaries of the second electrode substrate ELS2 and the second electrode mixture ELC2 on the second electrode substrate ELS2.

As a result, the second case arm CAA2 may fix the second electrode substrate ELS2 and the second electrode mixture ELC2 on a bottom surface of the second electrode substrate ELS2, and the third case arm CAA3 may fix the second electrode substrate ELS2 and the second electrode mixture ELC2 on a top surface of the second electrode substrate ELS2.

Referring back to FIG. 28, after the ejection of the second electrode mixture ELC2 from the fourth ejection unit EJU4, the rotary unit ROU of the sheet supply unit SEU may rotate in the counterclockwise direction. Therefore, the third ejection unit EJU3 may be positioned on the stacking table STT.

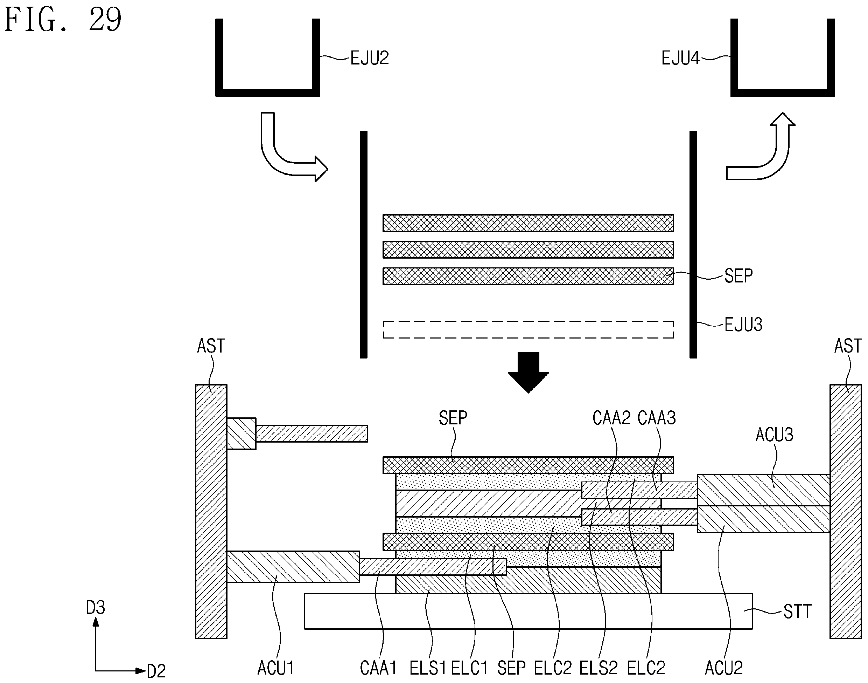

Referring to FIGS. 9 and 29, the separator SEP may be provided on the second electrode mixture ELC2. The separator SEP may be ejected from the bottom surface of the third ejection unit EJU3 of the sheet supply unit SEU. After the ejection of the separator SEP from the third ejection unit EJU3, the rotary unit ROU of the sheet supply unit SEU may rotate in the clockwise direction. Therefore, the second ejection unit EJU2 may be positioned on the stacking table STT.

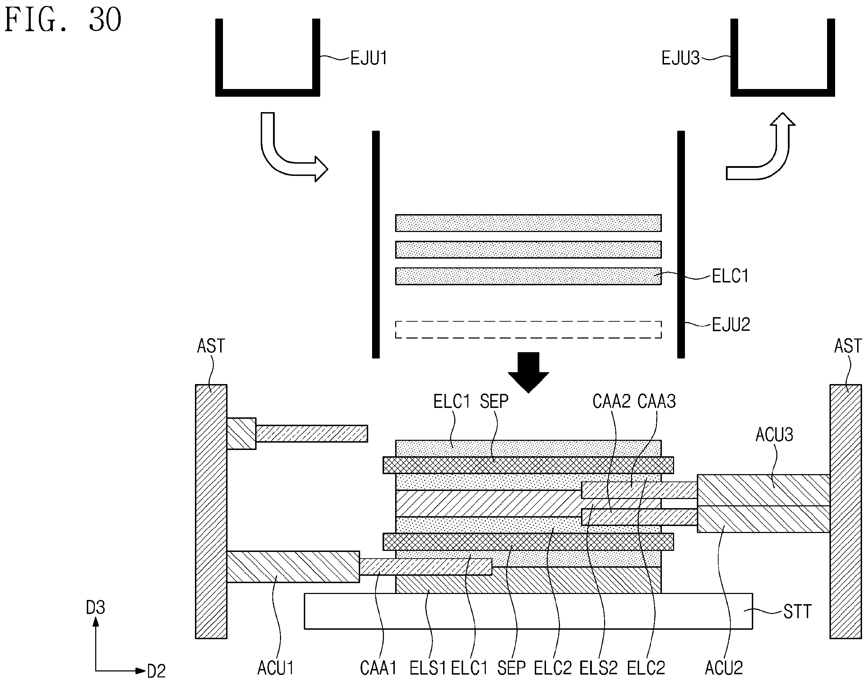

Referring to FIGS. 9 and 30, the first electrode mixture ELC1 may be provided on the separator SEP. The first electrode mixture ELC1 may be ejected from the bottom surface of the second ejection unit EJU2 of the sheet supply unit SEU. After the ejection of the first electrode mixture ELC1 from the second ejection unit EJU2, the rotary unit ROU of the sheet supply unit SEU may rotate in the counterclockwise direction. Therefore, the first ejection unit EJU1 may be positioned on the stacking table STT.

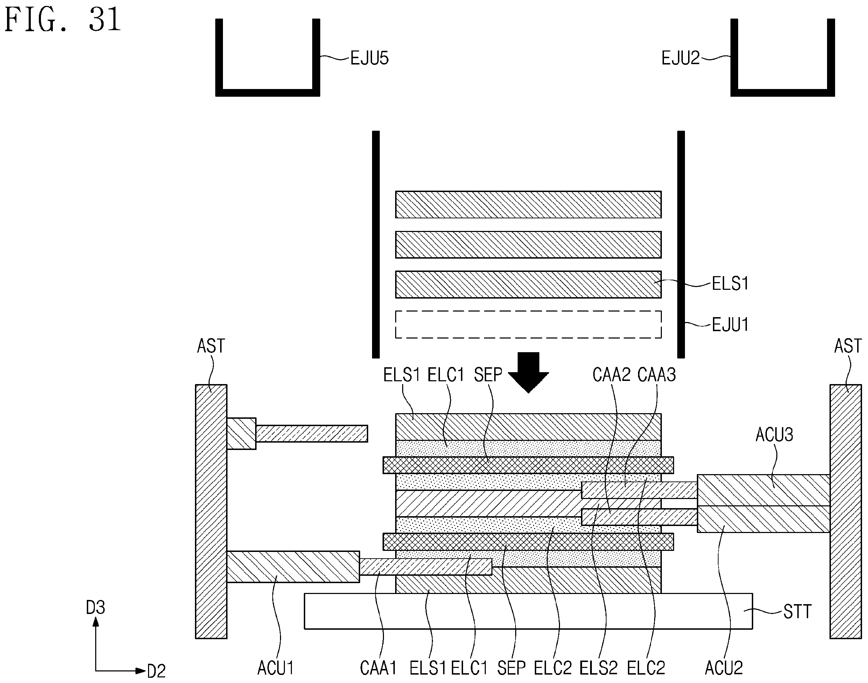

Referring to FIGS. 9 and 31, the first electrode substrate ELS1 may be provided on the first electrode mixture ELC1. The first electrode substrate ELS1 may be ejected from the bottom surface of the first ejection unit EJU1 of the sheet supply unit SEU.

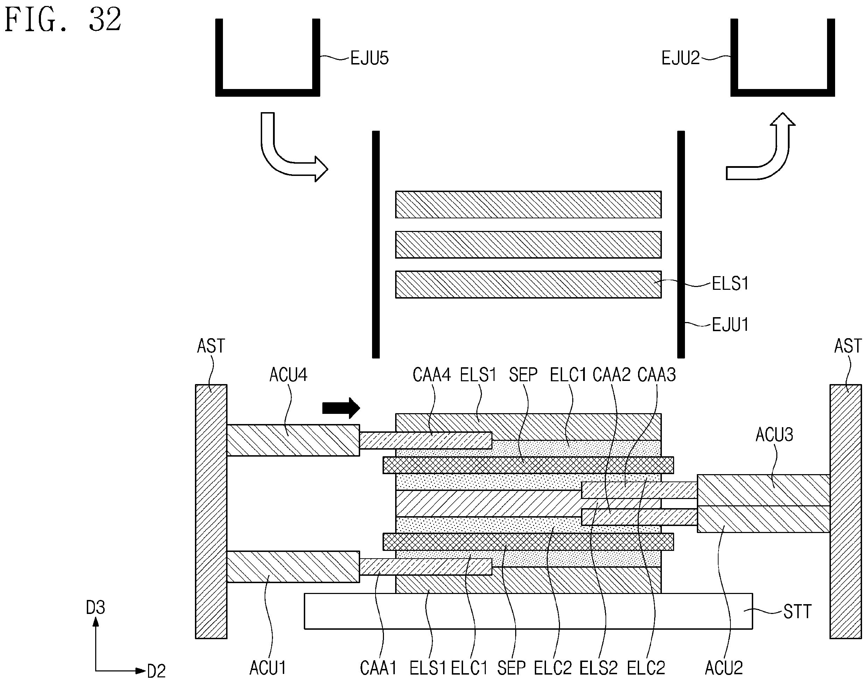

Referring to FIG. 32, the sheet alignment unit SAU may align and fix an upper (e.g., uppermost) first electrode substrate ELS1 and the first electrode mixture ELC1 on a bottom surface of the first electrode substrate ELS1. For example, the fourth case arm CAA4 of the sheet alignment unit SAU may grip outer lateral surfaces of the upper (e.g., uppermost) first electrode substrate ELS1 and the first electrode mixture ELC1 on the bottom surface of the first electrode substrate ELS1. The gripper GRP of the fourth case arm CAA4 may grip outer boundaries of the first electrode substrate ELS1 and the first electrode mixture ELC1. The gripper GRP may grip a portion of a thickness in the third direction D3 of the first electrode substrate ELS1. In addition, the gripper GRP may grip a portion of a thickness in the third direction D3 of the first electrode mixture ELC1.

In one or more embodiments, an electrode tab TAB may be provided on one selected from among four outer lateral surfaces of the upper (e.g., uppermost) first electrode substrate ELS1, which one selected from four outer lateral surfaces is not gripped by the fourth case arm CAA4. That is, the electrode tab TAB may be provided on one selected from the four outer lateral surfaces of the uppermost first electrode substrate (ELS1). This selected surface is not gripped by the fourth case arm (CAA4).

A fourth actuator ACU4 may drive the fourth case arm CAA4 to move in the first direction D1 or the second direction D2. As the fourth case arm CAA4 moves while gripping the outer lateral surfaces of the upper (e.g., uppermost) first electrode substrate ELS1 and the first electrode mixture ELC1 on the bottom surface of the first electrode substrate ELS1, it may be possible to adjust a position of the first electrode substrate ELS1 and the first electrode mixture ELC1. The fourth case arm CAA4 may continuously grip the first electrode substrate ELS1 and the first electrode mixture ELC1 whose position adjustment or alignment is completed, and thus the position of the first electrode substrate ELS1 and the first electrode mixture ELC1 may be fixed in a subsequent pressing process.

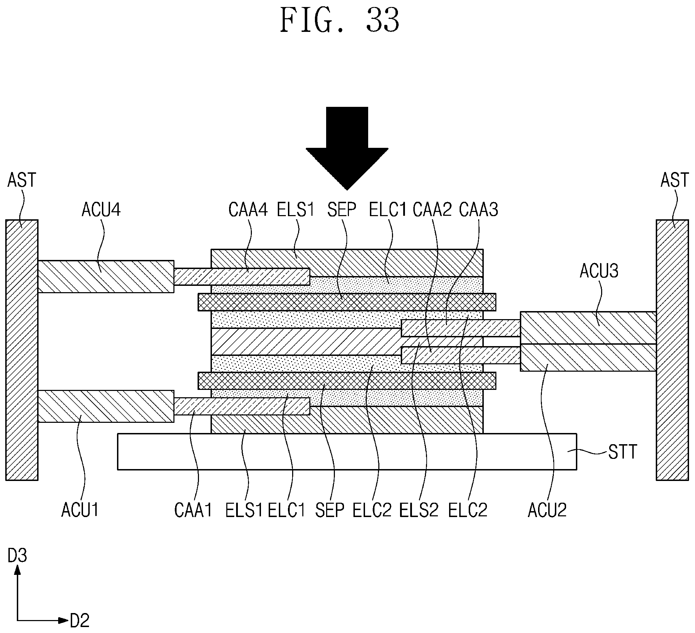

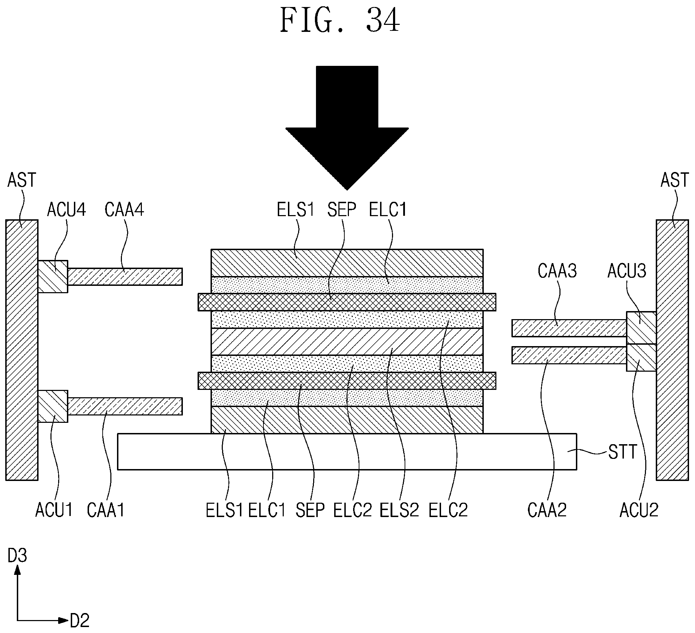

Referring to FIGS. 33 and 34, a pressing process may be performed on a stack structure in which the first electrode substrate ELS1, the first electrode mixture ELC1, the separator SEP, the second electrode mixture ELC2, and the second electrode substrate ELS2, the second electrode mixture ELC2, the separator SEP, the first electrode mixture ELC1, and the first electrode substrate ELS1 are sequentially stacked. The pressing process may be performed in two steps (e.g., acts or tasks) discussed with reference to FIGS. 25 and 26.

The stack structure may be temporarily joined through a first pressing process and may be fixed at the position of the stack structure. The stack structure may be completely joined through a second pressing process.

In one or more embodiments, in a rechargeable lithium battery, the aforementioned methods may be employed to stack and press electrodes, and thus the electrode substrate ELS, the electrode mixture ELC, and the separator SEP may be joined at the same time (e.g., concurrently), which may result in an improvement in process speed and a decrease in failure rate.

The following will describe a rechargeable lithium battery manufactured by the aforementioned method of manufacturing a rechargeable lithium battery in more detail. The same configuration as that of the rechargeable lithium battery discussed with reference to FIG. 1 will not be provided, and a difference thereof will be described in more detail.

### Rechargeable Lithium Battery

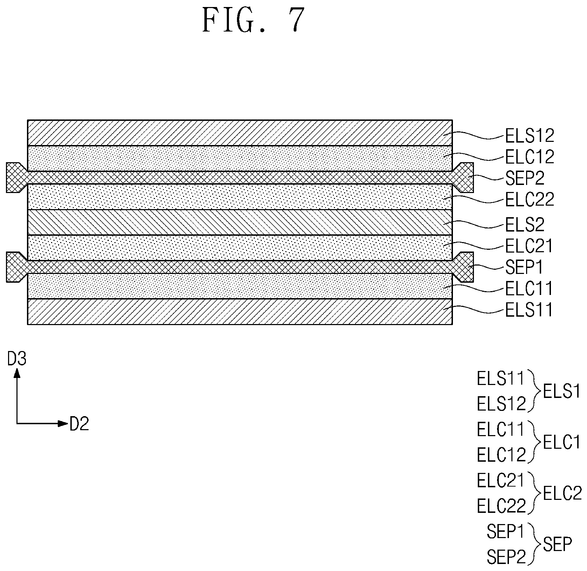

FIG. 6A illustrates a cross-sectional view showing a rechargeable lithium battery according to one or more embodiments of the present disclosure. FIG. 6B illustrates an enlarged view showing a separator in a rechargeable lithium battery according to one or more embodiments of the present disclosure. FIG. 7 illustrates a cross-sectional view showing a rechargeable lithium battery according to one or more embodiments of the present disclosure.

Referring to FIG. 6A, a rechargeable lithium battery may include a first electrode substrate ELS1, a first electrode mixture ELC1 on the first electrode substrate ELS1, a separator SEP on the first electrode mixture ELC1, a second electrode mixture ELC2 on the separator SEP, and a second electrode substrate ELS2 on the second electrode mixture ELC2.

Referring to FIG. 6B, the first electrode mixture ELC1 may be provided on one selected from among top and bottom surfaces of the separator SEP, and the second electrode mixture ELC2 may be provided on the other selected from among the top and bottom surfaces of the separator SEP. In one or more embodiments, the separator SEP may have a length L1 in the second direction D2. The first electrode mixture ELC1 may have a length L2 in the second direction D2. The second electrode mixture ELC2 may have a length L3 in the second direction D2. The length L1 may be greater than the length L2. The length L1 may be greater than the length L3.

The separator SEP may include a buried part EMP buried between the first electrode mixture ELC1 and the second electrode mixture ELC2, and may also include a protruding part PRP that is a portion other than the buried part EMP.

The buried part EMP may have a thickness ST1 in the third direction D3. The protruding part PRP may have an irregular thickness in the third direction D3. The protruding part PRP may have a maximum thickness ST2 in the third direction D3. The maximum thickness ST2 in the third direction D3 of the protruding part PRP may denote a maximum value of thicknesses in the third thickness D3 of the protruding part PRP. In utilizing the aforementioned method for manufacturing a rechargeable lithium battery of the present disclosure, the separator SEP may be second pressed together with the electrode substrate ELS and the electrode mixture ELC, and thus the buried part EMP of the separator SEP may also shrink. Therefore, a thickness ST2 in the third direction D3 of the protruding part PRP may be greater than a thickness ST1 in the third direction D3 of the buried part EMP. For example, a ratio of the thickness ST1 to the thickness ST2 (ST1/ST2) may range from about 0.4 to about 0.6. In other words, when utilizing the aforementioned method for manufacturing the rechargeable lithium battery as disclosed, the separator SEP may undergo the second pressing together with the electrode substrate ELS and the electrode mixture ELC, causing the buried part EMP of the separator SEP to shrink. Consequently, the thickness ST2 in the third direction D3 of the protruding part PRP may be greater than the thickness ST1 in the third direction D3 of the buried part (EMP). For example, the ratio of thickness ST1 to thickness ST2 (ST1/ST2) may range from about 0.4 to about 0.6.

Referring to FIG. 7, a rechargeable lithium battery may include a first electrode substrate ELS11, a first electrode mixture ELC11 on the first electrode substrate ELS11, a separator SEP1 on the first electrode mixture ELC11, a second electrode mixture ELC21 on the separator SEP1, a second electrode substrate ELS2 on the second electrode mixture ELC21, a second electrode mixture ELC22 on the second electrode substrate ELS2, a separator SEP2 on the second electrode mixture ELC22, a first electrode mixture ELC12 on the separator SEP2, and a first electrode substrate ELS12 on the first electrode mixture ELC12.

Each of the separators SEP1 and SEP2 of the rechargeable lithium battery, as discussed with reference to FIG. 6, may include a buried part EMP between a first electrode mixture ELC1 and a second electrode mixture ELC2, and may also include a protruding part PRP that is a portion other than the buried part EMP.

In one or more embodiments, a maximum thickness ST2 in the third direction D3 of the protruding part PRP may be greater than a thickness ST1 in the third direction D3 of the buried part EMP. For example, a ratio of the thickness ST1 to the maximum thickness ST2 (ST1/ST2) may range from about 0.4 to about 0.6.

In one or more embodiments, an electrode stacking apparatus may include a sheet supply unit that rotates and concurrently (e.g., simultaneously) ejects electrode, thereby effectively stacking electrodes. In addition, a case arm may be utilized, such that the ejected electrode sheets may be aligned to reduce a failure rate.

In one or more embodiments, the electrode stacking apparatus may be utilized to independently supply and stack an electrode substrate and an electrode mixture. Afterwards, the electrode substrate, the electrode mixture, and a separator that are independently stacked may be concurrently (e.g., simultaneously) pressed and joined. The electrode substrate and the electrode mixture may be joined together with the separator, without separately joining only the electrode substrate and the electrode mixture, with the result that a speed of fabrication process may increase. Moreover, the electrode stacking apparatus may be utilized, such that the fabrication process may be reduced from typically three steps to two steps (e.g., act or task) . For example, a general manufacturing process may include i) preparation of electrode plate (pressing of substrate and mixture), ii) notching, and iii) separation of electrode plate and separator (three-step (e.g., act or task) process). The utilization of the electrode stacking apparatus according to the present disclosure may achieve a two-step (e.g., act or task) process, for example, i) pre-notching of substrate and mixture, and ii) a single step (e.g., act or task) of stacking and pressing of substrate, mixture, and separator (thereby the two-step (e.g., act or task) process). In other words, the electrode stacking apparatus may independently supply and stack the electrode substrate and the electrode mixture. These components, along with the separator, are then concurrently pressed and joined. This method should eliminate the need to separately join the electrode substrate and mixture, thereby speeding up the fabrication process. Additionally, the apparatus should reduce the typical three-step process (preparation of electrode plate, notching, and separation of electrode plate and separator) to a two-step process: pre-notching of the substrate and mixture, followed by a single step of stacking and pressing the substrate, mixture, and separator.

As used herein, the terms "substantially," "about," and similar terms are used as terms of approximation and not as terms of degree, and are intended to account for the inherent deviations in measured or calculated values that would be recognized by those of ordinary skill in the art. "About" or "approximately," as used herein, is also inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value.

In the context of the present disclosure and unless otherwise defined, the terms "use," "using," and "used" may be considered synonymous with the terms "utilize," "utilizing," and "utilized," respectively.

Any numerical range recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

An electrode stacking apparatus, a device of manufacturing a battery, a battery management system (BMS) device, and/or any other relevant devices or components according to embodiments of the present invention described herein may be implemented utilizing any suitable hardware, firmware (e.g. an application-specific integrated circuit), software, or a combination of software, firmware, and hardware. For example, the various components of the device may be formed on one integrated circuit (IC) chip or on separate IC chips. Further, the various components of the device may be implemented on a flexible printed circuit film, a tape carrier package (TCP), a printed circuit board (PCB), or formed on one substrate. Further, the various components of the device may be a process or thread, running on one or more processors, in one or more computing devices, executing computer program instructions and interacting with other system components for performing the various functionalities described herein. The computer program instructions are stored in a memory which may be implemented in a computing device using a standard memory device, such as, for example, a random access memory (RAM). The computer program instructions may also be stored in other non-transitory computer readable media such as, for example, a CD-ROM, flash drive, or the like. Also, a person of skill in the art should recognize that the functionality of various computing devices may be combined or integrated into a single computing device, or the functionality of a particular computing device may be distributed across one or more other computing devices without departing from the scope of the present disclosure.

A person of ordinary skill in the art would appreciate, in view of the present disclosure in its entirety, that each suitable feature of the various embodiments of the present disclosure may be combined or combined with each other, partially or entirely, and may be technically interlocked and operated in various suitable ways, and each embodiment may be implemented independently of each other or in conjunction with each other in any suitable manner unless otherwise stated or implied.

## Claims

1. An electrode stacking apparatus (ESA), comprising:
a stacking table (STT); and
a sheet supply unit (SEU), comprising a rotary unit (ROU) and first to fifth ejection units (EJU1-EJU5),
wherein the rotary unit is configured to rotate and concurrently to sequentially place the first to fifth ejection units on the stacking table,
wherein the first ejection unit (EJU1) is configured to eject a first electrode substrate (ELS1),
wherein the second ejection unit (EJU2) is configured to eject a first electrode mixture (ELC1),
wherein the third ejection unit (EJU3) is configured to eject a separator (SEP),
wherein the fourth ejection unit (EJU4) is configured to eject a second electrode mixture (ELC2), and
wherein the fifth ejection unit (EJU5) is configured to eject a second electrode substrate (ELS2).

2. The electrode stacking apparatus of claim 1, wherein the first ejection unit (EJU1) comprises a first open-and-close part (OCP1) that constitutes a bottom surface of the first ejection unit,
wherein the first open-and-close part comprises:
a gate (GAT) to open or close the bottom surface of the first ejection unit; and
a gate actuator (GAA) to drive the gate.

3. The electrode stacking apparatus of claim 1, further comprising a sheet alignment unit (SAU),
wherein the sheet alignment unit comprises:
a first case arm (CAA) to align and fixe the first electrode substrate (ELS1) and the first electrode mixture (ELC1); and
a first actuator (ACU) to drive the first case arm to move in a first direction or a second direction.

4. The electrode stacking apparatus of claim 3, wherein the first case arm (CAA) comprises a gripper (GRP) to grip an outer lateral surface of the first electrode substrate (ELS1) and an outer lateral surface of the first electrode mixture (ELC1).

5. The electrode stacking apparatus of claim 4, wherein
the gripper (GRP) has a first thickness in a third direction,
the first electrode substrate (ELS1) has a second thickness in the third direction, the first electrode mixture (ELC1) has a third thickness in the third direction, and
a ratio of the first thickness to a sum of the second thickness and the third thickness is in a range of 0.4 to 0.6.

6. The electrode stacking apparatus of claim 4, wherein the gripper (GRP) comprises an electrode receiving space (ERS) that receives the first electrode substrate (ELS1) and the first electrode mixture (ELC1),
wherein the electrode receiving space comprises:
a first region (P1) that receives the first electrode substrate; and
a second region (P2) that receives the first electrode mixture,
wherein a width in the first direction of the first region is substantially the same as a width in the first direction of the first electrode substrate, and
wherein a width in the first direction of the second region is substantially the same as a width in the first direction of the first electrode mixture.

7. The electrode stacking apparatus of claim 3, wherein the sheet alignment unit (SAU) comprises:
a second case arm (CAA2) to align and fix the second electrode substrate (ELS2) and the second electrode mixture (ELC2); and
a second actuator (ACU2) to drive the second case arm to move in the first direction or the second direction.

8. The electrode stacking apparatus of any one of the preceding claims, wherein
one selected from among the first electrode substrate (ELS1) and the second electrode substrate (ELS2) is a negative electrode current collector, and
the other selected from among the first electrode substrate and the second electrode substrate is a positive electrode current collector.

9. The electrode stacking apparatus of any one of the preceding claims, wherein
one selected from among the first electrode mixture (ELC1) and the second electrode mixture (ELC2) is a negative electrode active material layer, and
the other selected from among the first electrode mixture and the second electrode mixture is a positive electrode active material layer.

10. A method for manufacturing a rechargeable lithium battery utilizing an electrode stacking apparatus (ESA) as defined in any one of the preceding claims, the method comprising:
sequentially providing a first electrode substrate (ELS1) and a first electrode mixture (ELC1) on the stacking table (STT) via the sheet supply unit (SEU);
aligning and fixing the first electrode substrate and the first electrode mixture via the sheet alignment unit (SAU);
sequentially providing the separator (SEP), the second electrode mixture (ELC2), and the second electrode substrate (ELS2) on the first electrode mixture via the sheet supply unit; and
aligning and fixing the second electrode substrate and the second electrode mixture via the sheet alignment unit to manufacture a stack structure.

11. The method of claim 10, wherein
the method further comprises:
rotating the rotary unit (ROU) and concurrently placing the first to fifth ejection units (EJU1-EJU5) sequentially on the stacking table (STT) via the rotary unit,
ejecting the first electrode substrate (ELS1) via the first ejection unit (EJU1),
ejecting the first electrode mixture (ELC1) via the second ejection unit (EJU2),
ejecting eject the separator (SEP) via the third ejection unit (EJU3),
ejecting the second electrode mixture (ELC2) via the fourth ejection unit (EJU4), and
ejecting the second electrode substrate (ELS2) via the fifth ejection unit (EJU5).

12. The method of claim 10, wherein the sheet alignment unit (SAU) comprises a first case arm (CAA1) and a first actuator (ACU1), wherein the method further comprises:
aligning and fixing the first electrode substrate (ELS1) and the first electrode mixture (ELC1) utilizing the first case arm; and
driving the first case arm to move in a first direction or a second direction utilizing the first actuator,
wherein the first case arm grips an outer lateral surface of the first electrode substrate and an outer lateral surface of the first electrode mixture, and the first actuator drives the first case arm to move to align the first electrode substrate and the first electrode mixture.

13. The method of claim 10, further comprising:
performing a first pressing process to temporarily join the stack structure; and
performing a second pressing process on the stack structure that is temporarily joined.

14. A rechargeable lithium battery, comprising:
a negative electrode that comprises a negative electrode current collector and a negative electrode active material layer on the negative electrode current collector;
a positive electrode that comprises a positive electrode current collector and a positive electrode active material layer on the positive electrode current collector; and
a separator (SEP) between the negative electrode active material layer and the positive electrode active material layer,
wherein the separator comprises:
a buried part (EMP) between the negative electrode active material layer and the positive electrode active material layer; and
a protruding part (PRP) that is a portion other than the buried part,
wherein a maximum thickness of the protruding part is greater than a thickness of the buried part.

15. The rechargeable lithium battery of claim 14, wherein a ratio of the thickness of the buried part (EMP) to the maximum thickness of the protruding part (PRP) is in a range of 0.4 to 0.6.
